# EUROPEAN PATENT APPLICATION

(11) **EP 4 024 875 A1**
(43) Date of publication of application: **06.07.2022**
(21) Application number: 20857419.4
(22) Date of filing: 19.05.2020
(51) Int. Cl.: H04N 21/235, H04N 21/236, H04N 21/434, H04N 21/435, H04N 21/6547

(54) **RECEPTION DEVICE AND RECEPTION METHOD, AND TRANSMISSION DEVICE AND TRANSMISSION METHOD**

(30) Priority: 30.08.2019 JP 2019158573
(71) Applicant: Sony Group Corporation, Tokyo 108-0075 (JP)
(72) Inventor: YAGASAKI, Yoichi, Tokyo 108-0075 (JP); KOBAYASHI, Yoshiyuki, Tokyo 108-0075 (JP)
(74) Representative: 2SPL Patentanwälte PartG mbB
(86) International application number: PCT/JP2020/019738
(87) International publication number: WO 2021/038981

(57) **Abstract**

A reception device for receiving information associated with content quality improvement is provided.

The reception device includes a reception unit that receives a stream generated by multiplexing content and attribute information associated with a weighting factor of a learning model learned to process the content and an acquisition unit that acquires the attribute information by demultiplexing the received stream. The attribute information includes information associated with at least one of a type of the content to which the weighting factor is to be applied, a data size of the weighting factor to be updated, position information indicating a position of the weighting factor to be updated in the learning model, and accuracy of data regarding the weighting factor.

## Description

### [Technical Field]

A technology disclosed in the present description relates to a reception device and a reception method for receiving information associated with content and a transmission device and a transmission method for transmitting information associated with content.

### [Background Art]

The number of TV receivers and the like adopting a technology for improving image quality, such as super-resolution and a high dynamic range, has been increasing in recent years. Moreover, an acoustic-related technology has come into widespread use as a high-resolution technology for converting a low-resolution sound source removed or compressed to a low range during recording or editing into a high-resolution sound source. In other words, it has become more and more common that a content reproduction device such as a TV receiver reproduces and outputs content after improving quality of original content and provides the content to a user (a person viewing and listening to the content).

For example, a super-resolution processing method is known as a method which forms a high-resolution image from a low-resolution image with use of a convolutional neural network so learned beforehand as to estimate a super-resolution image from a low-resolution image or a standard-resolution image by deep learning (Deep Learning) (for example, see PTL 1 and NPL 2).

Moreover, a reproduction method is known as a method which converts a low-resolution sound source reproduced from such a medium as a CD (Compact Disc) or distributed as a stream into a high-resolution sound source, with use of a learning model learned beforehand, and outputs the high-resolution sound source as audio (for example, see PTL 2).

An enormous volume of learning data is required to generate a learning model to be used for performing a picture super-resolution process and increasing sound source resolution, with use of deep learning. Moreover, a heavy calculation load is imposed by execution of deep learning. Accordingly, a learning model learned beforehand by such a server as a manufacturer with use of deep learning or the like is generally incorporated in such a device as a TV receiving device and a music player, and shipped in this form. Here, it is possible to update a weighting factor of the learning model learned beforehand, with use of a back propagation (error back propagation) technology or the like, and further, continuously learn the learning model learned beforehand. However, it is not practical to re-learn the learning model of the shipped product due to a limited volume of available learning data, a limitation imposed by a calculation load, or the like. On the other hand, such a server as the manufacturer is allowed to continuously learn the learning model and repeat update of the weighting factor. These learning accomplishments are applicable to a subsequent device, but are not reflected in the shipped device. Accordingly, an end user is required to purchase a new product to enjoy benefits of the super-resolution process or the high-resolution technology provided by a latest learning model.

### [Citation List]

### [Patent Literature]

[PTL 1]
   Japanese Patent Laid-open No. 2019-23798
[PTL 2]
   Japanese Patent Laid-open No. 2017-203999
[PTL 3]
   Japanese Patent Laid-open No. 2015-92529
[PTL 4]
   Japanese Patent No. 4915143
[PTL 5]
   Japanese Patent Laid-open No. 2007-143010

### [Non Patent Literature]

[NPL 1]
Image Super-Resolution Using Deep. Convolutional Networks. Chao Dong, Chen Change Loy, Member, IEEE, Kaiming He, Member, IEEE, and Xiaoou Tang, Fellow, IEEE

### [Summary]

### [Technical Problem]

An object of the technology disclosed in the present description is to provide a reception device and a reception method for receiving information associated with quality improvement of content and a transmission device and a transmission method for transmitting information associated with quality improvement of content.

### [Solution to Problem]

The technology disclosed in the present description has been developed in consideration of the abovementioned problems. A first aspect of the technology is directed to a reception device including a reception unit that receives a stream generated by multiplexing content and attribute information associated with a weighting factor of a learning model learned to process the content, and an acquisition unit that acquires the attribute information by demultiplexing the received stream.

The content includes a picture and an audio signal. In addition, the learning model includes a learning model for performing an image quality improving process for the picture, such as a super-resolution process or high dynamic range rendering, and a learning model for performing a sound quality improving process for the audio signal, such as bandwidth expansion.

Moreover, the attribute information includes information associated with at least one of a type of the content to which the weighting factor is to be applied, a data size of the weighting factor to be updated, position information indicating a position of the weighting factor to be updated, in the learning model, and accuracy of data regarding the weighting factor.

In addition, a second aspect of the technology disclosed in the present description is directed to a reception method including a reception step of receiving a stream generated by multiplexing content and attribute information associated with a weighting factor of a learning model learned to process the content, and an acquisition step of acquiring the attribute information by demultiplexing the received stream.

In addition, a third aspect of the technology disclosed in the present description is directed to a transmission device including a multiplexing unit that generates a stream by multiplexing content and attribute information associated with a weighting factor of a learning model learned to process the content, and a transfer unit that transfers the multiplexed stream to a predetermined transfer medium.

The content includes a picture. Moreover, the transmission device according to the third aspect further includes a learning unit that learns the weighting factor.

Further, the attribute information includes information associated with at least one of a type of the content to which the weighting factor is to be applied, a data size of the weighting factor to be updated, position information indicating a position of the weighting factor to be updated in the learning model, and accuracy of data regarding the weighting factor.

In addition, a fourth aspect of the technology disclosed in the present description is directed to a transmission method including a multiplexing step of generating a stream by multiplexing content and attribute information associated with a weighting factor of a learning model learned to process the content, and a transfer step of transferring the multiplexed stream to a predetermined transfer medium.

### [Advantageous Effect of Invention]

Providable according to the technology disclosed in the present description are a reception device and a reception method for receiving information associated with quality improvement of content from a multiplexed stream of the content and a transmission device and a transmission method for transmitting information associated with quality improvement of content with use of a multiplexed stream of the content.

Note that the advantageous effect described in the present description is presented only by way of example. Advantageous effects expected to be offered by the technology disclosed in the present description are not limited to that advantageous effect. In addition, the technology disclosed in the present description may produce additional advantageous effects other than the advantageous effect described above.

Other objects, characteristics, and advantages of the technology disclosed in the present description will become apparent in reference to more detailed description based on an embodiment described below and accompanying drawings.

### [Brief Description of Drawings]

[FIG. 1]

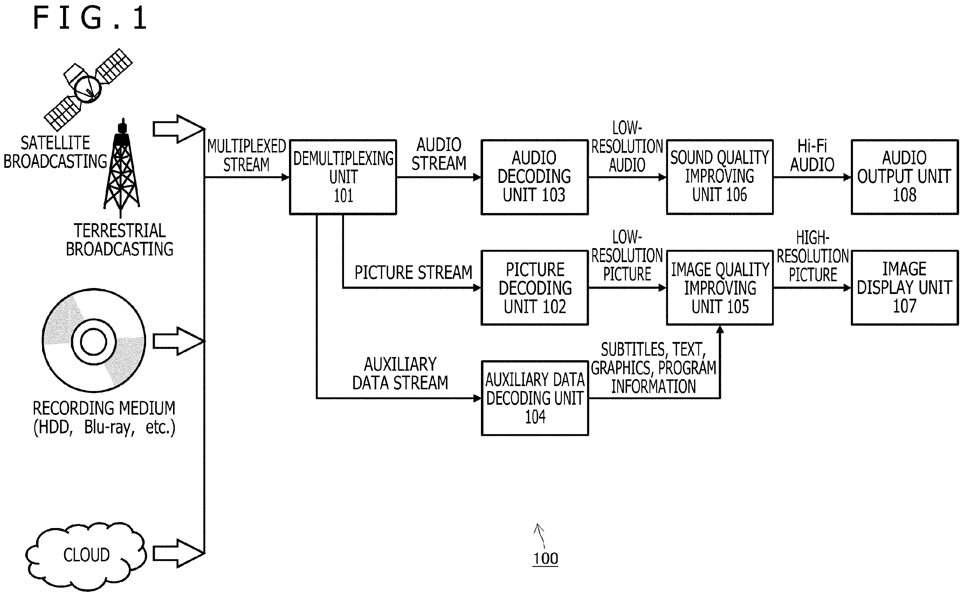

   FIG. 1 is a diagram depicting a configuration example of a content reproduction system 100.
[FIG. 2]

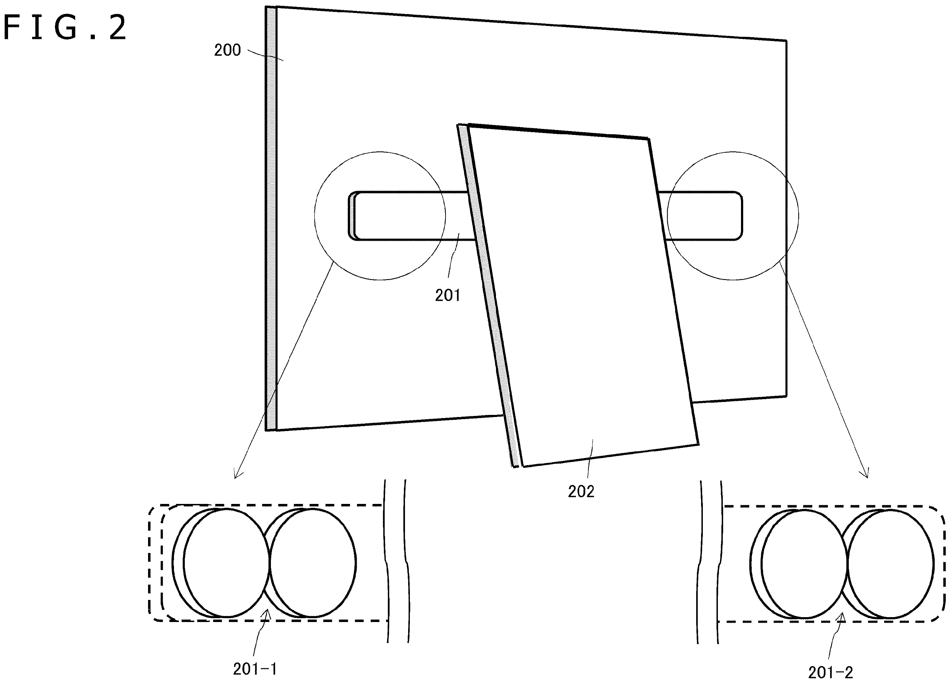

   FIG. 2 is a diagram depicting an example of application of a panel speaker technology to a display.
[FIG. 3]

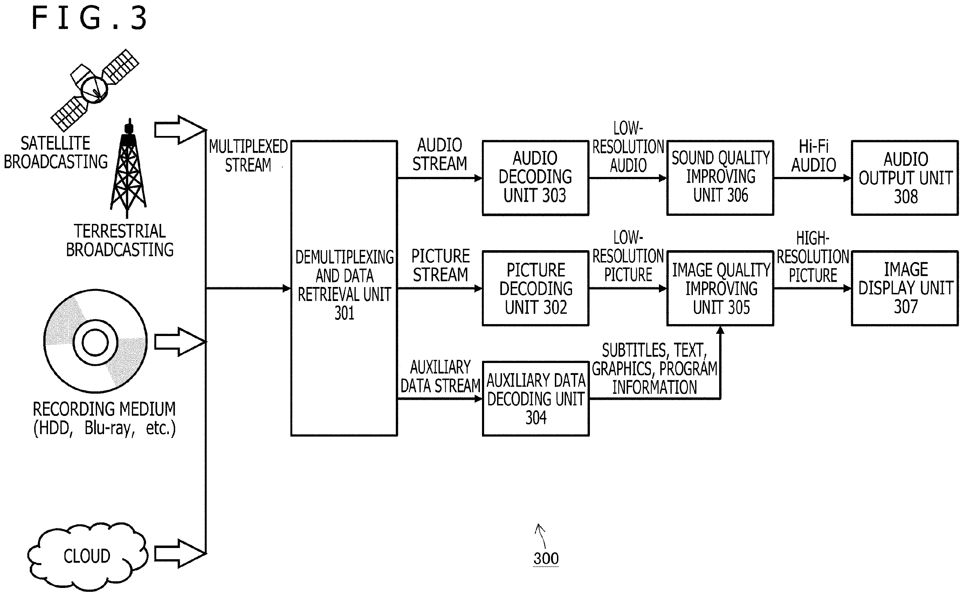

   FIG. 3 is a diagram depicting a configuration example of a content reproduction system 300.
[FIG. 4]

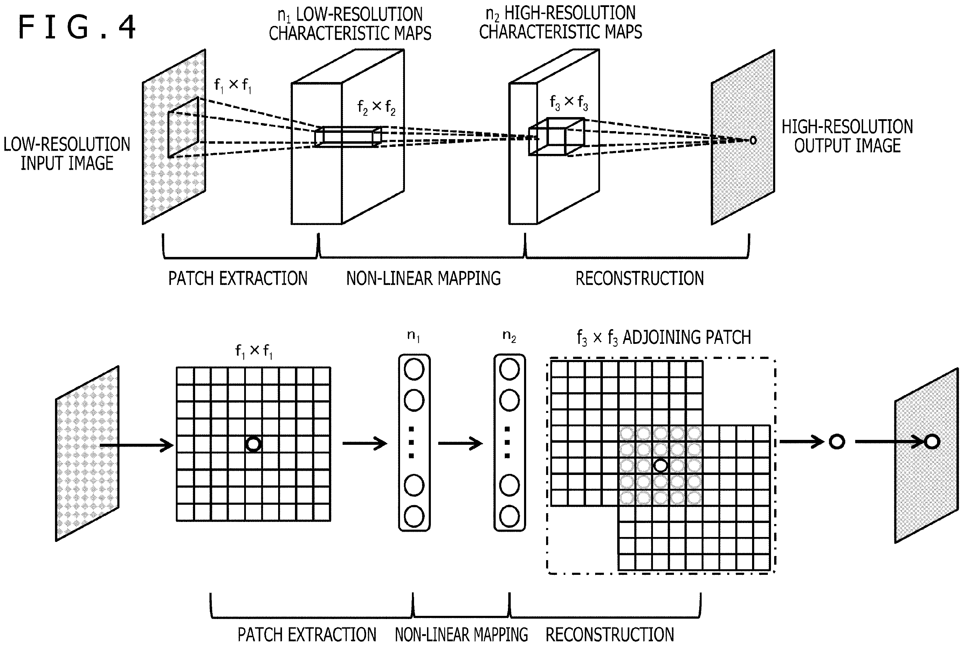

   FIG. 4 is a diagram depicting an example of a super-resolution process using a neural network.
[FIG. 5]

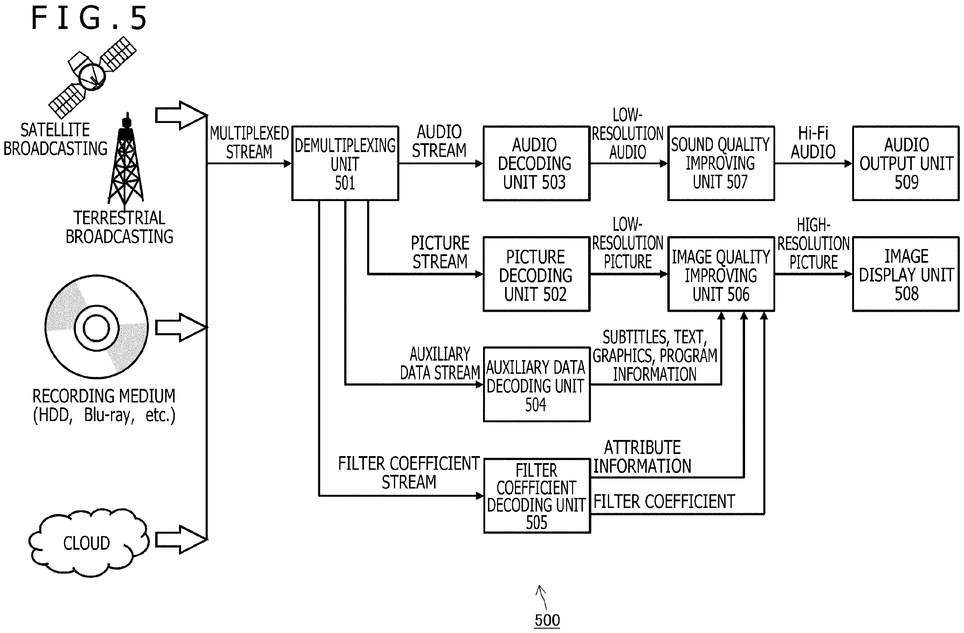

   FIG. 5 is a diagram depicting a configuration example of a content reproduction system 500 (first example).
[FIG. 6]

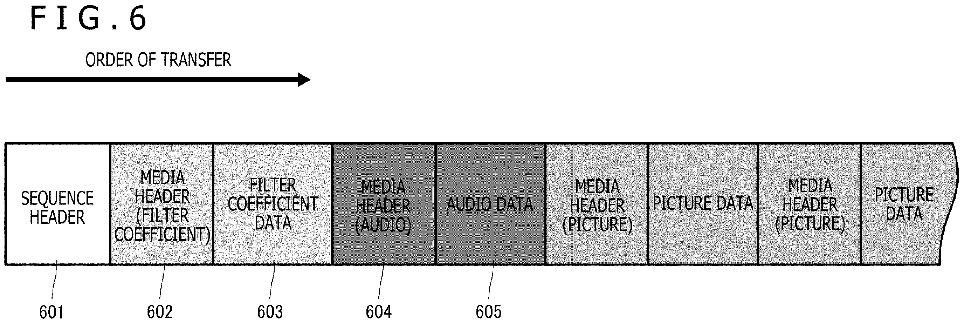

   FIG. 6 is a diagram depicting a multimedia transfer data format example (first example).
[FIG. 7]

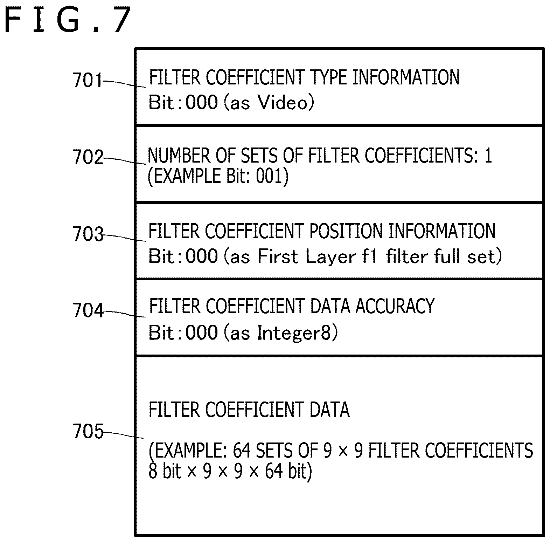

   FIG. 7 is a diagram depicting a data format example of filter coefficients multiplexed on the multimedia transfer data format (first example).
[FIG. 8]

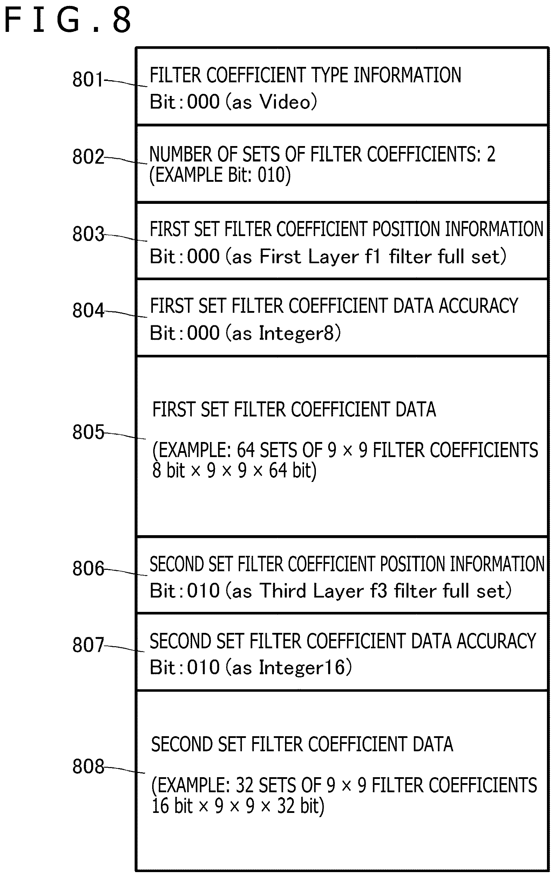

   FIG. 8 is a diagram depicting a data format example of filter coefficients multiplexed on the multimedia transfer data format.
[FIG. 9]

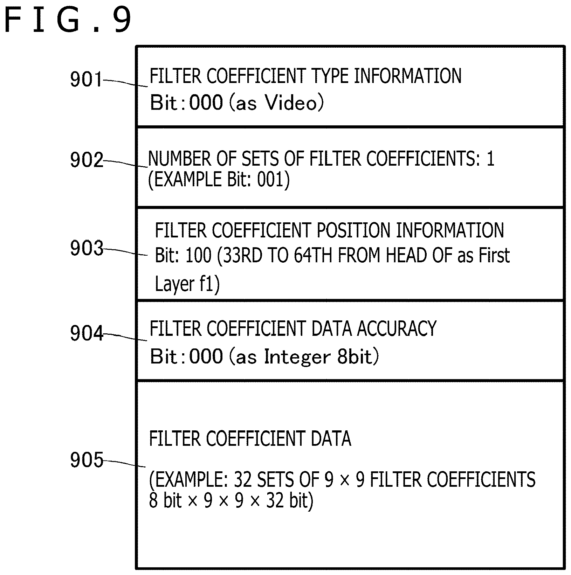

   FIG. 9 is a diagram depicting a data format example of filter coefficients multiplexed on the multimedia transfer data format.
[FIG. 10]

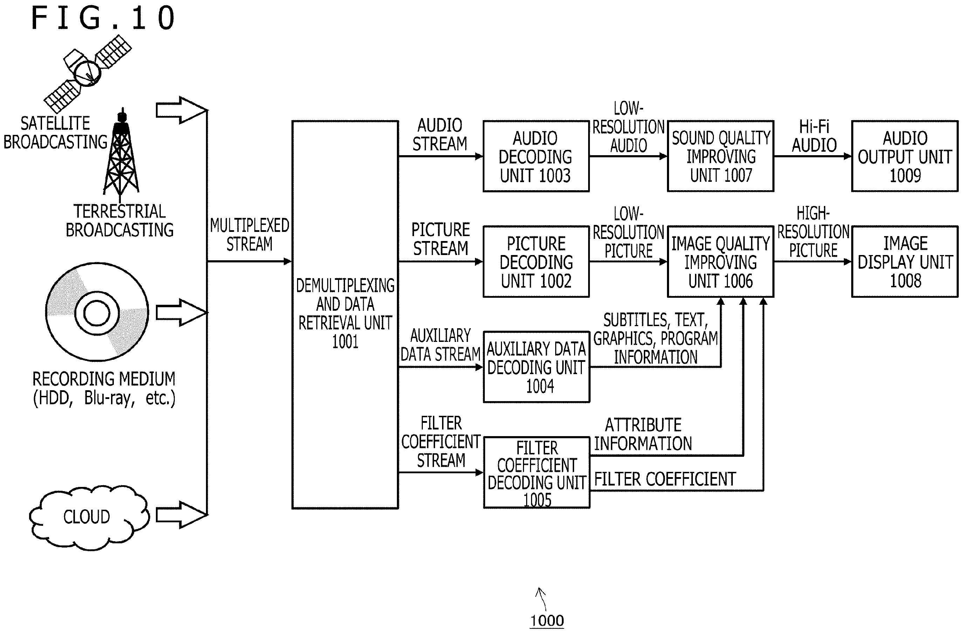

   FIG. 10 is a diagram depicting another configuration example of a content reproduction system 1000 (first example).
[FIG. 11]

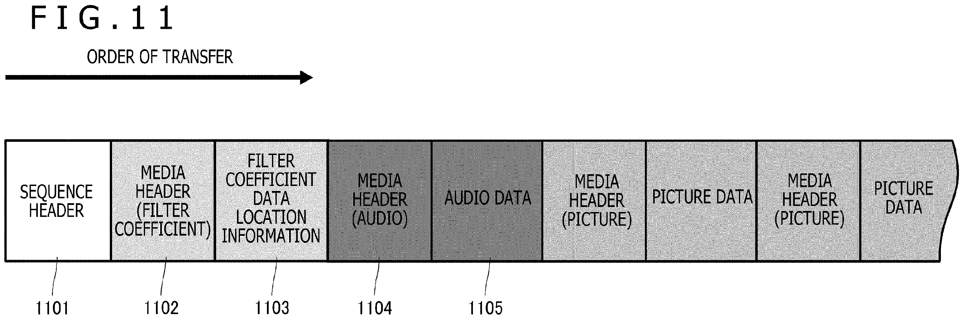

   FIG. 11 is a diagram depicting a multimedia transfer data format example (first example).
[FIG. 12]

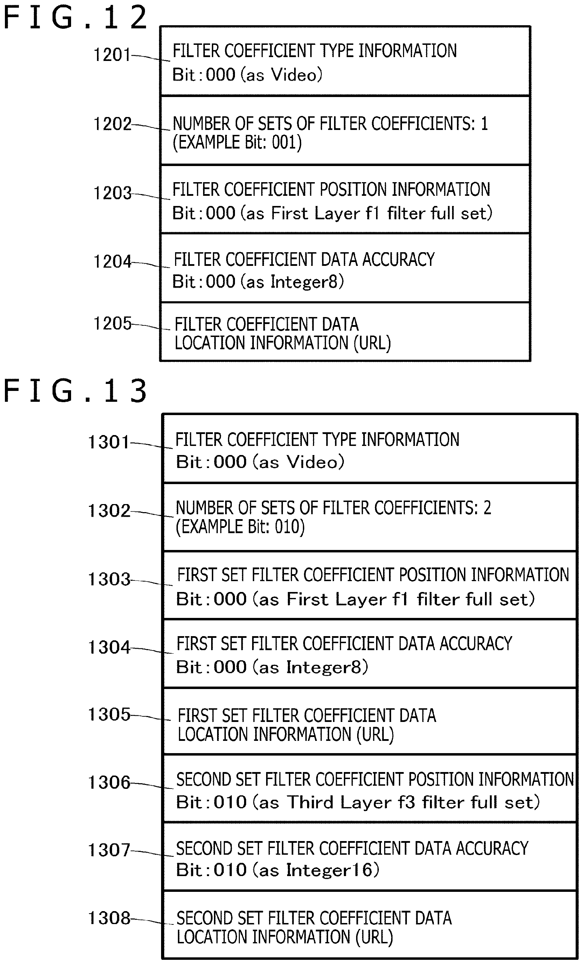

   FIG. 12 is a diagram depicting a data format example of filter coefficients multiplexed on the multimedia transfer data format (first example).
[FIG. 13]
   FIG. 13 is a diagram depicting a data format example of filter coefficients multiplexed on the multimedia transfer data format.
[FIG. 14]

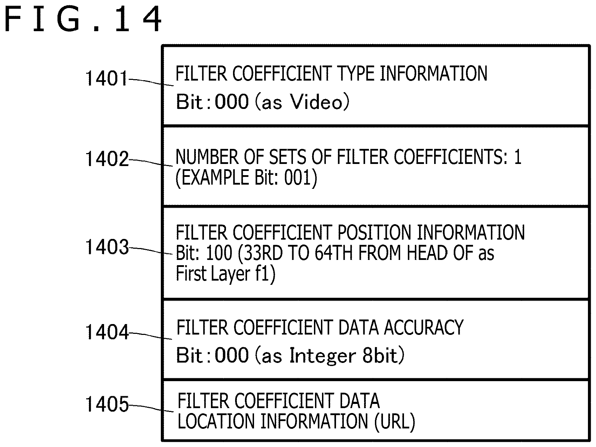

   FIG. 14 is a diagram depicting a data format example of filter coefficients multiplexed on the multimedia transfer data format.
[FIG. 15]

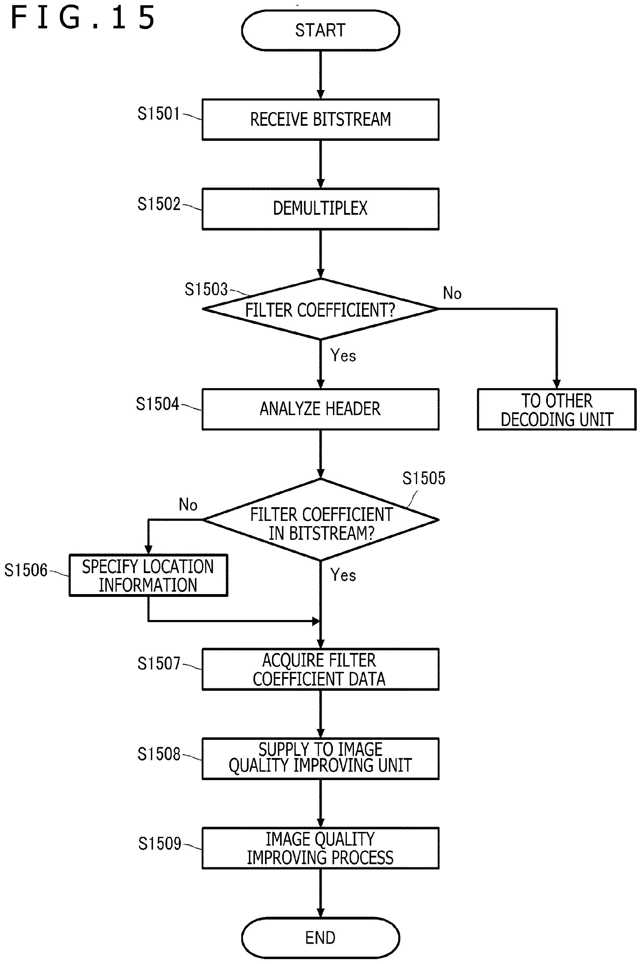

   FIG. 15 is a flowchart presenting a processing procedure performed when a multiplexed bitstream is received (first example).
[FIG. 16]

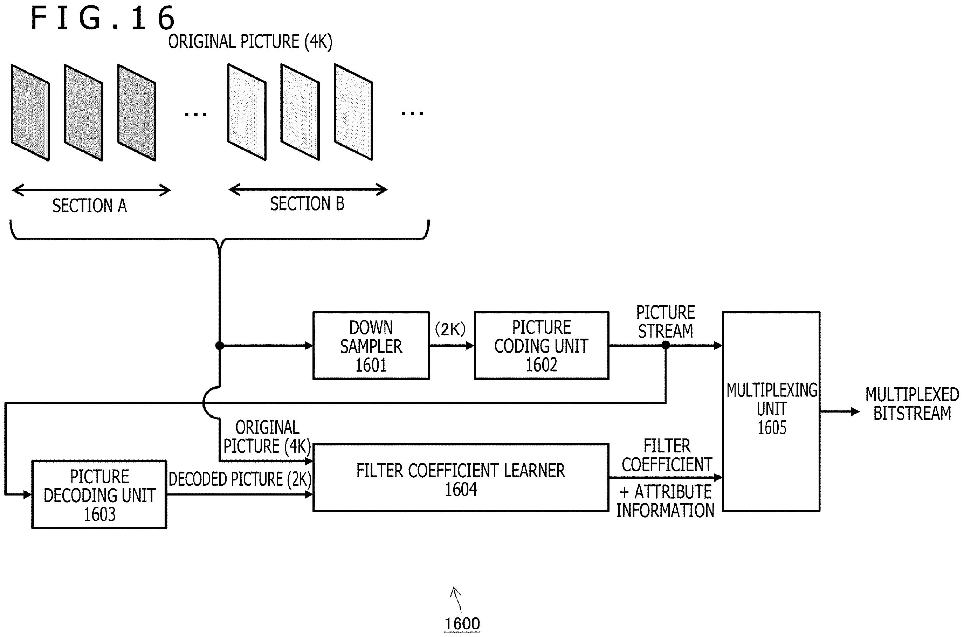

   FIG. 16 is a diagram depicting a configuration example of a content coding system 1600.
[FIG. 17]

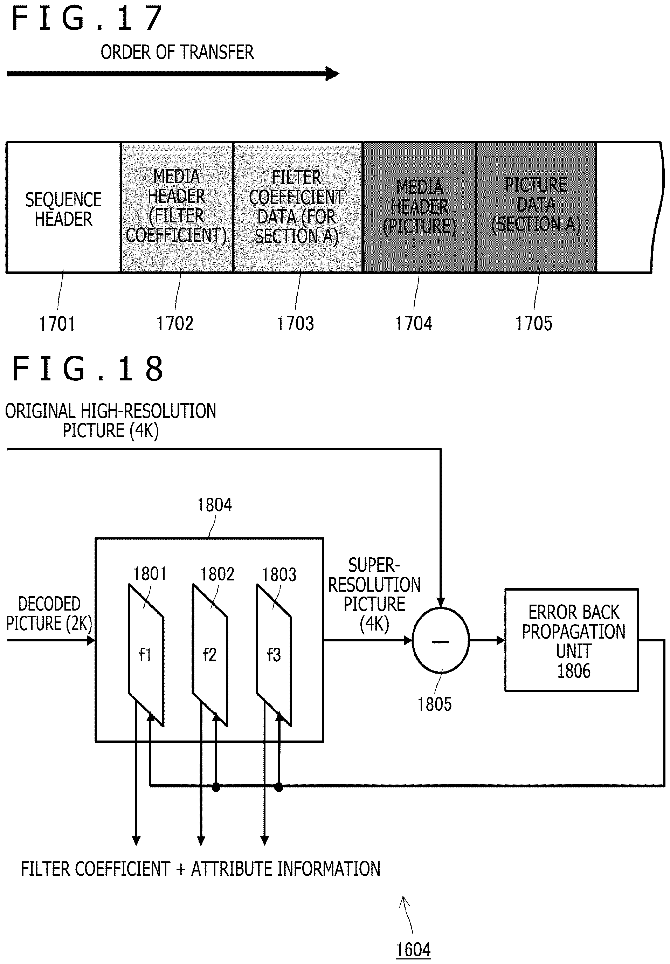

   FIG. 17 is a diagram depicting a configuration example of transfer data coded by the content coding system 1600.
[FIG. 18]
   FIG. 18 is a diagram depicting an internal configuration example of a filter coefficient learner 1604.
[FIG. 19]

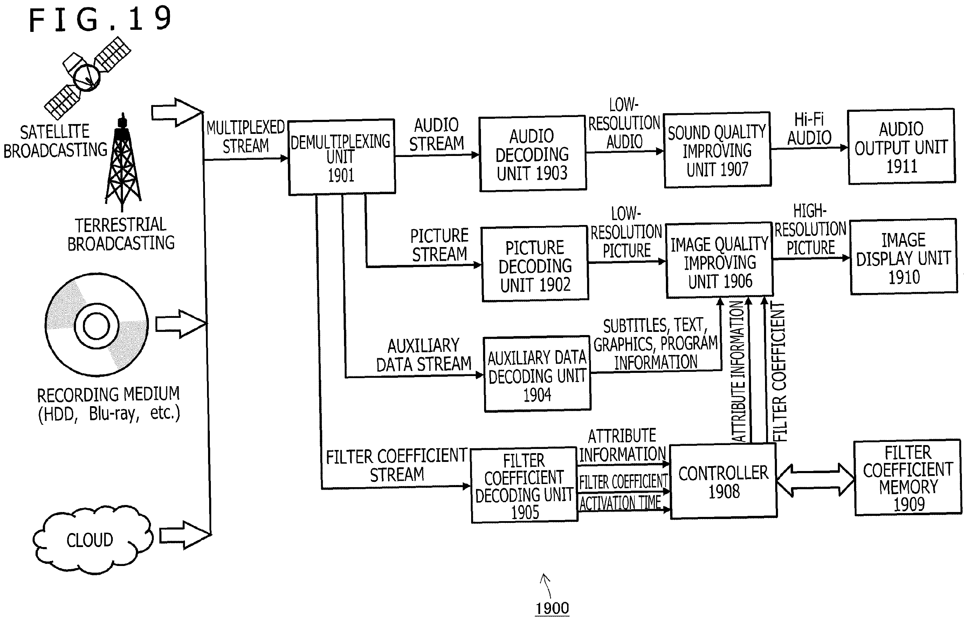

   FIG. 19 is a diagram depicting a configuration example of a content reproduction system 1900 (second example).
[FIG. 20]

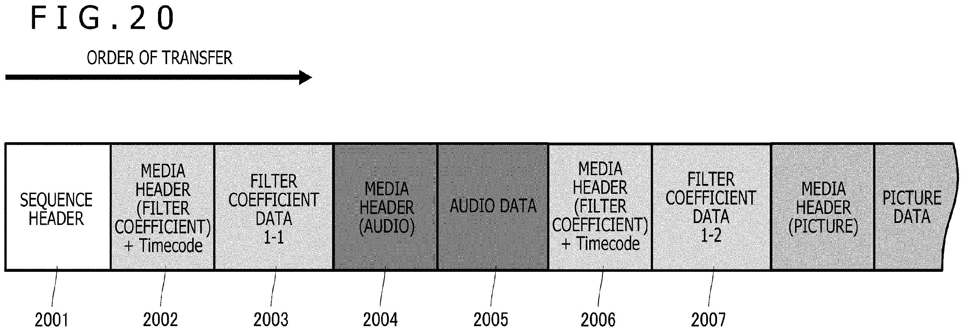

   FIG. 20 is a diagram depicting a multimedia transfer data format example (second example).
[FIG. 21]

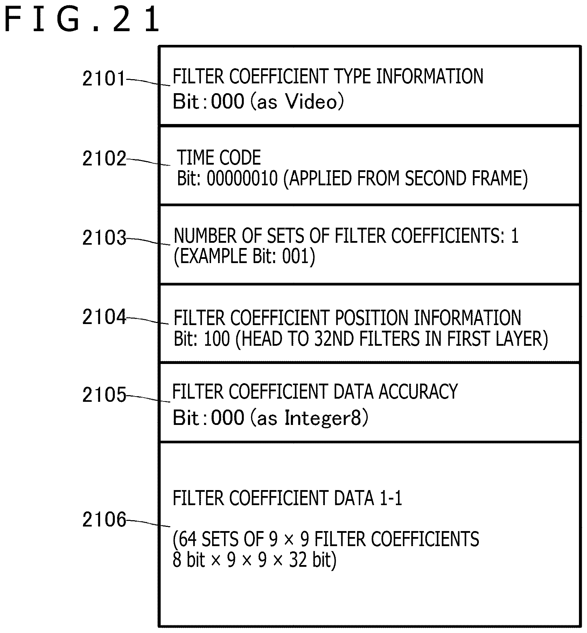

   FIG. 21 is a diagram depicting a data format example of filter coefficients multiplexed on the multimedia transfer data depicted in FIG. 20 (second example).
[FIG. 22]

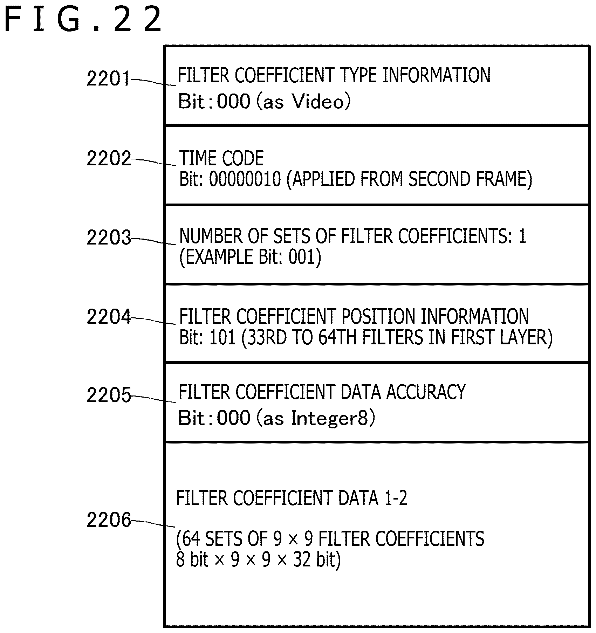

   FIG. 22 is a diagram depicting a data format example of filter coefficients multiplexed on the multimedia transfer data depicted in FIG. 20 (second example).
[FIG. 23]

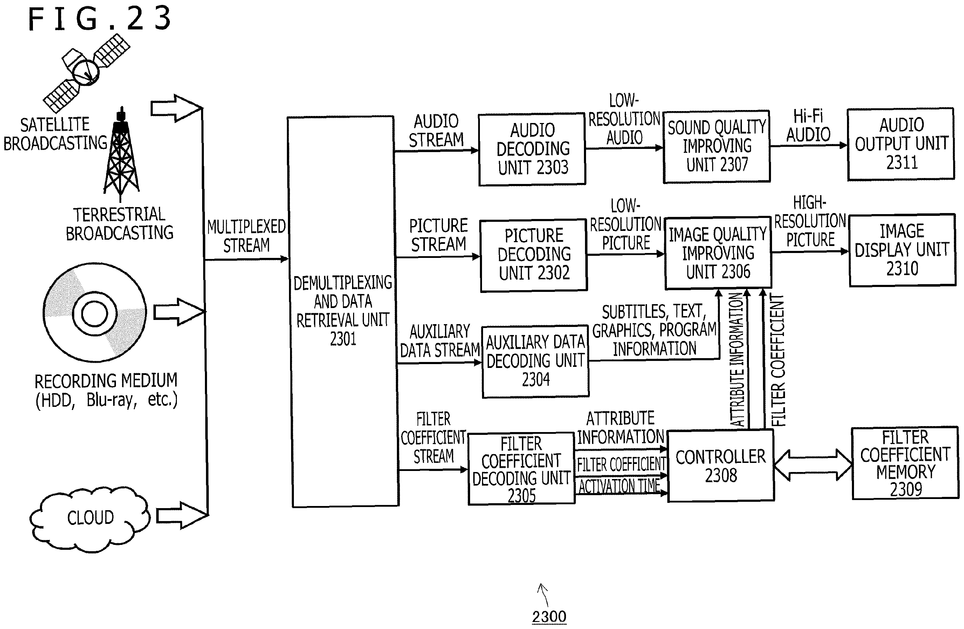

   FIG. 23 is a diagram depicting another configuration example of a content reproduction system 2300 according to the second example.
[FIG. 24]

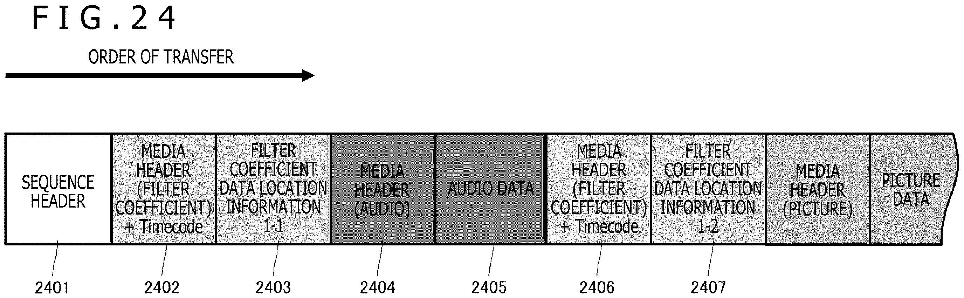

   FIG. 24 is a diagram depicting a multimedia transfer data format example (second example).
[FIG. 25]

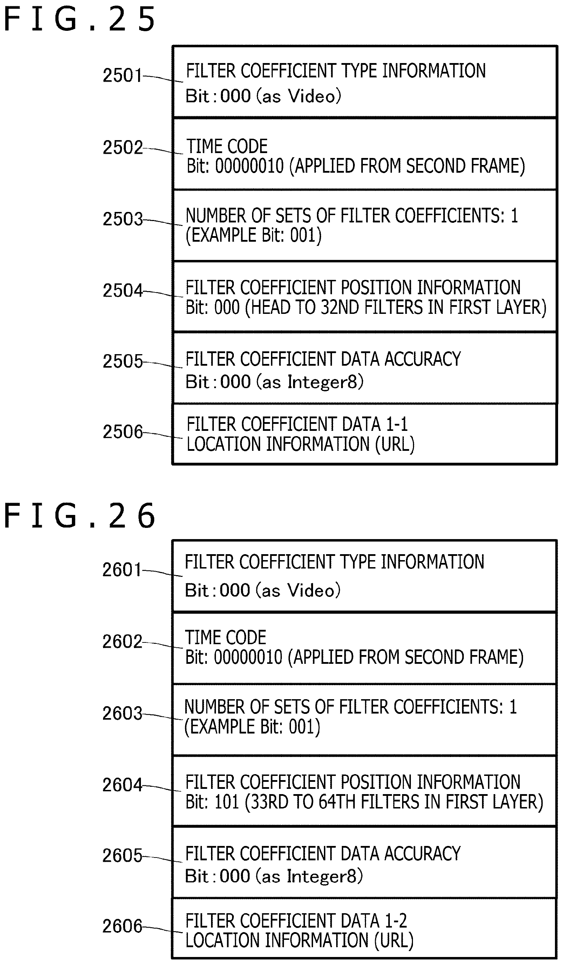

   FIG. 25 is a diagram depicting a data format example of filter coefficients multiplexed on the multimedia transfer data depicted in FIG. 24 (second example).
[FIG. 26]
   FIG. 26 is a diagram depicting a data format example of filter coefficients multiplexed on the multimedia transfer data depicted in FIG. 24 (second example).
[FIG. 27]

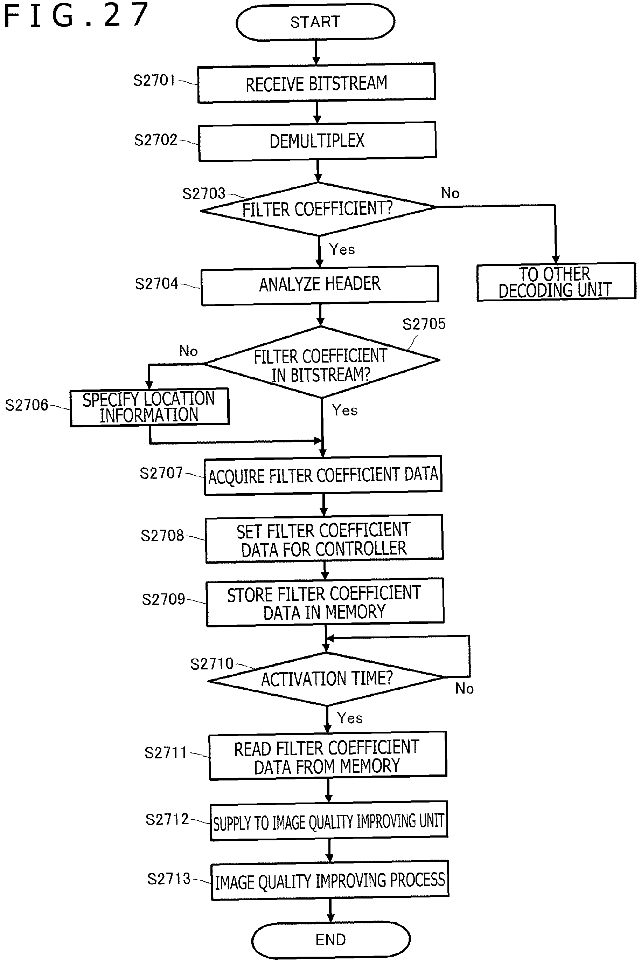

   FIG. 27 is a flowchart presenting a processing procedure performed when a multiplexed bitstream is received (second example).
[FIG. 28]

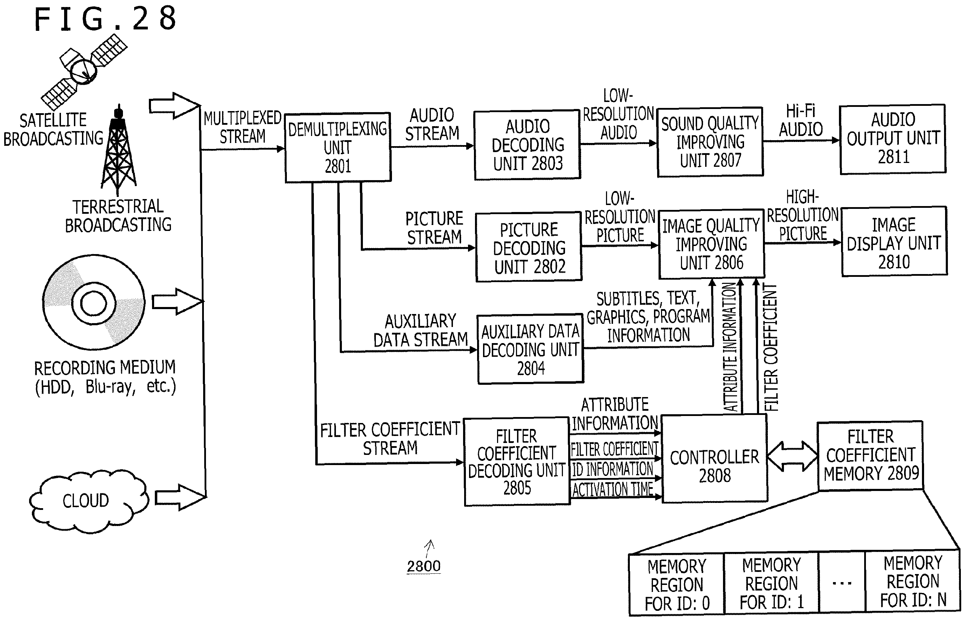

   FIG. 28 is a diagram depicting a configuration example of a content reproduction system 2800 according to a third example.
[FIG. 29]

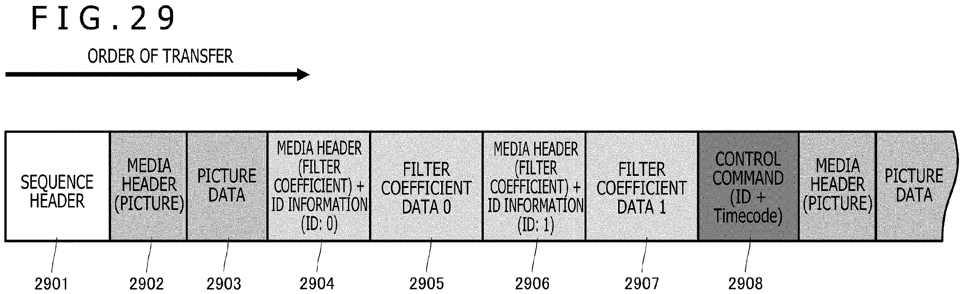

   FIG. 29 is a diagram depicting a multimedia transfer data format example (third example).
[FIG. 30]

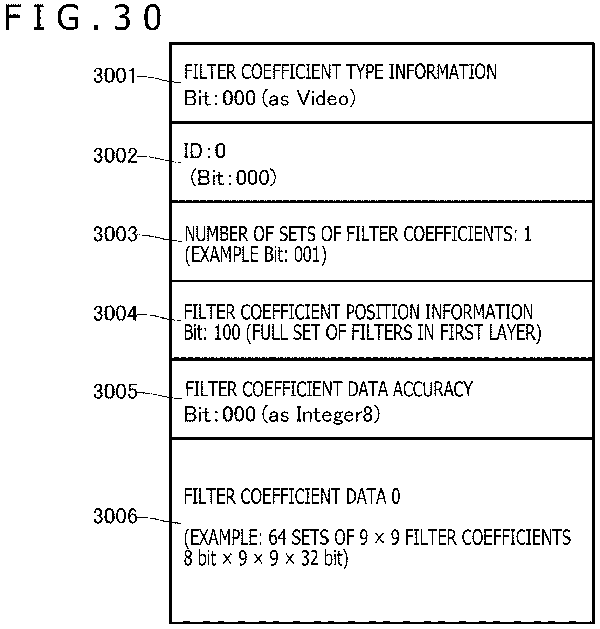

   FIG. 30 is a diagram depicting a data format example of filter coefficients multiplexed on the multimedia transfer data depicted in FIG. 29 (third example).
[FIG. 31]

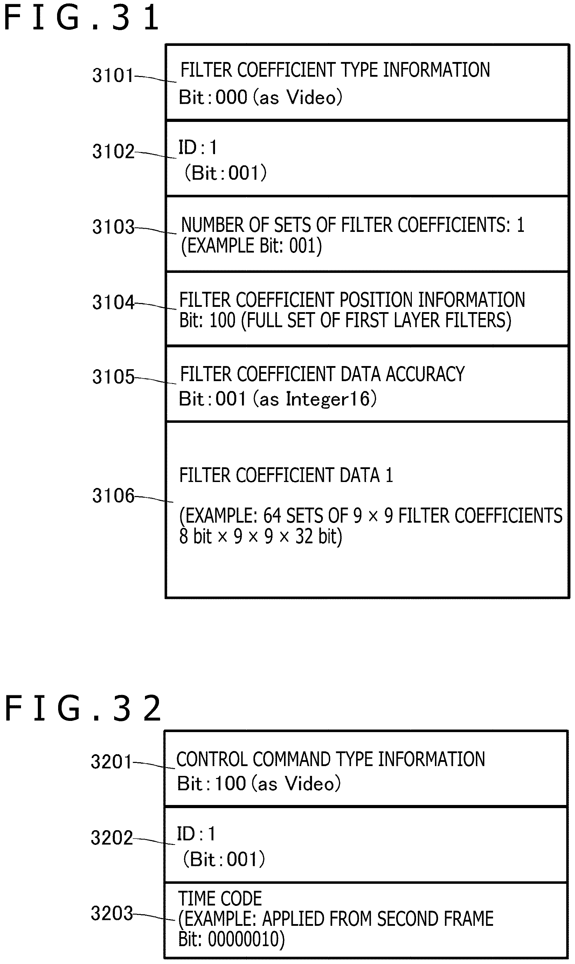

   FIG. 31 is a diagram depicting a data format example of filter coefficients multiplexed on the multimedia transfer data depicted in FIG. 29 (third example).
[FIG. 32]
   FIG. 32 is a diagram depicting a data format example of a control command multiplexed on the multimedia transfer data depicted in FIG. 29 (third example).
[FIG. 33]

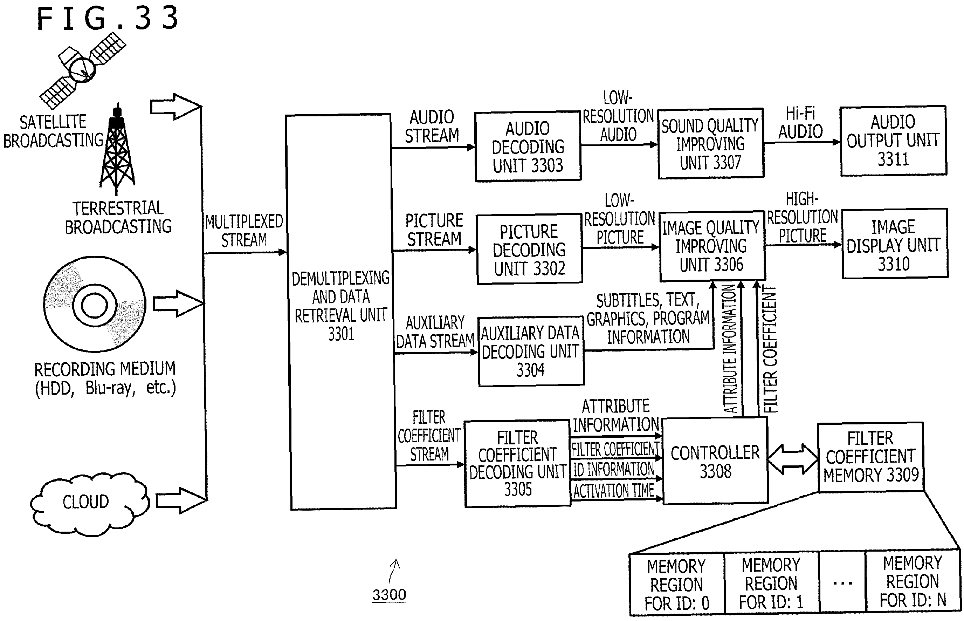

   FIG. 33 is a diagram depicting a multimedia transfer data format example (third example).
[FIG. 34]

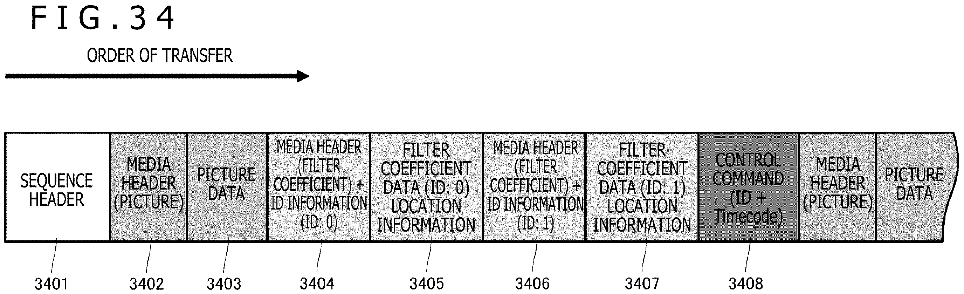

   FIG. 34 is a diagram depicting a multimedia transfer data format example (third example).
[FIG. 35]

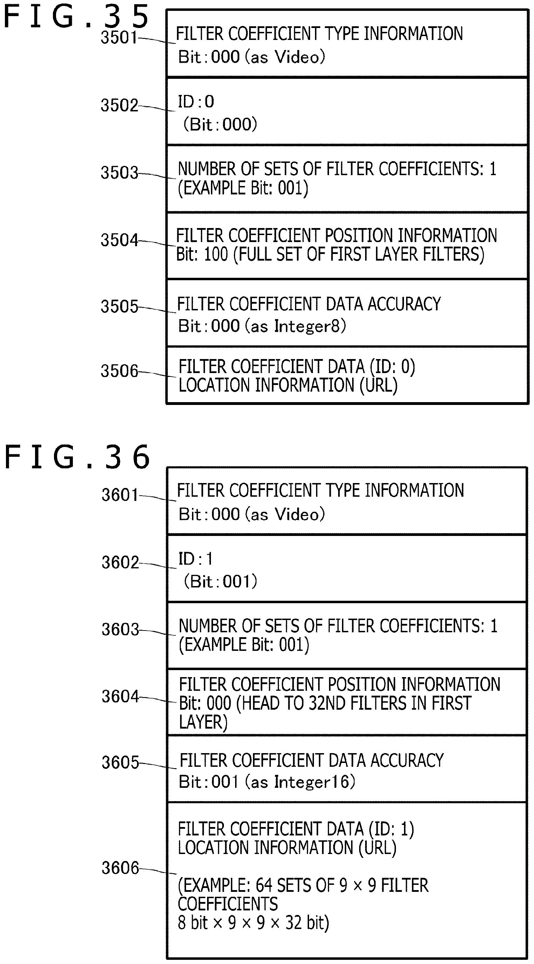

   FIG. 35 is a diagram depicting a data format example of filter coefficient data multiplexed on the multimedia transfer data depicted in FIG. 34.
[FIG. 36]
   FIG. 36 is a diagram depicting a data format example of filter coefficient data multiplexed on the multimedia transfer data depicted in FIG. 34.
[FIG. 37]

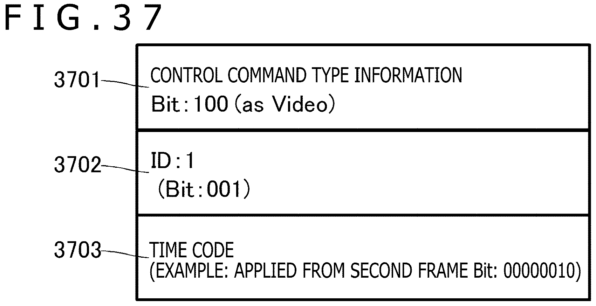

   FIG. 37 is a diagram depicting a data format example of a control command multiplexed on the multimedia transfer data depicted in FIG. 34.
[FIG. 38]

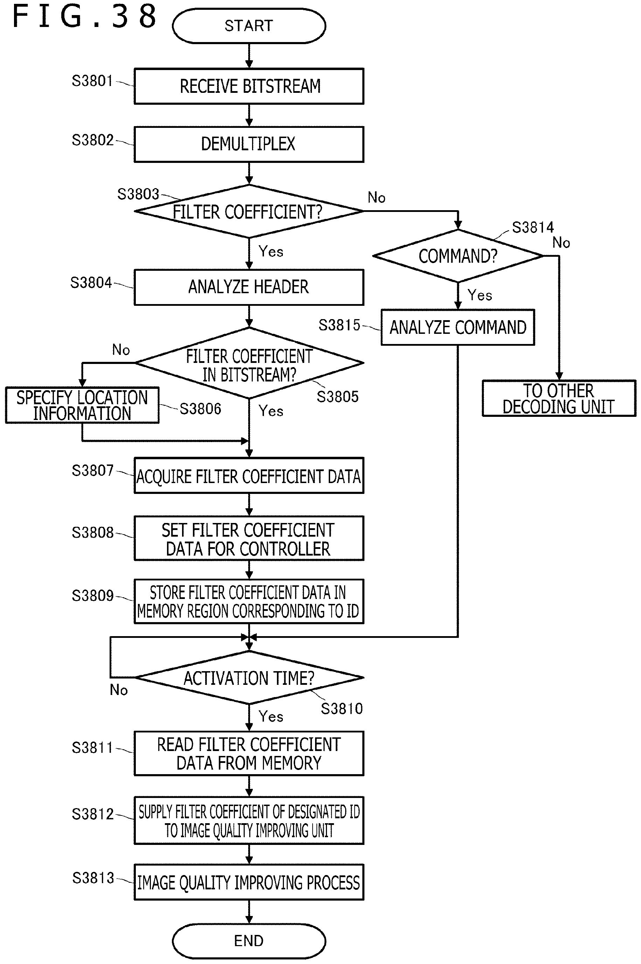

   FIG. 38 is a flowchart presenting a processing procedure performed when a multiplexed bitstream is received (third example).
[FIG. 39]

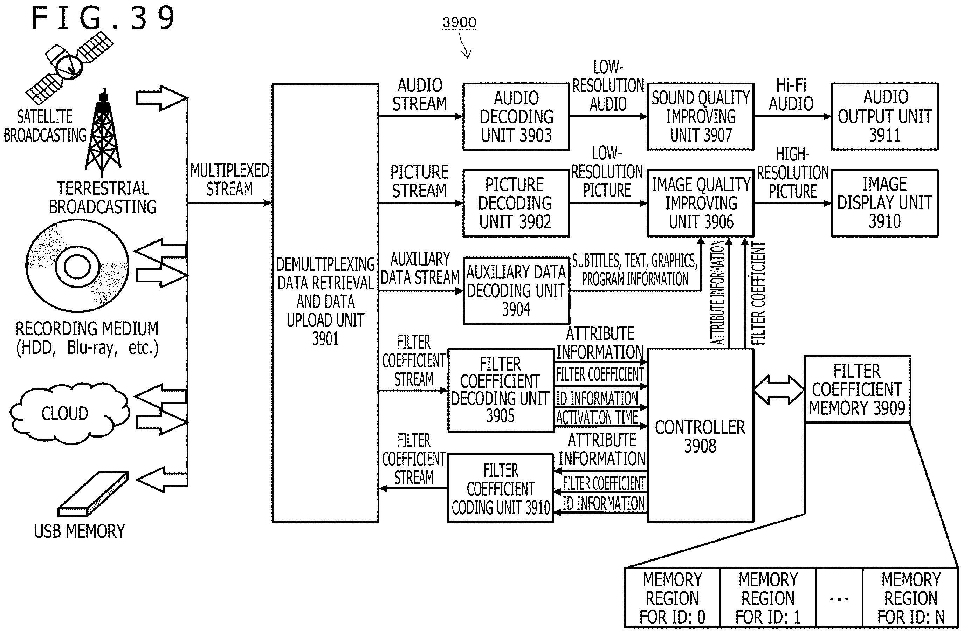

   FIG. 39 is a diagram depicting a configuration example of a content reproduction system 3900 according to a fourth example.

### [Description of Embodiment]

Embodiments of a technology disclosed in the present description will hereinafter be described in detail with reference to the drawings.

FIG. 1 schematically depicts a configuration example of a content reproduction system 100. According to the content reproduction system 100 depicted in the figure, it is assumed that content is provided in the form of a broadcasting signal from terrestrial broadcasting, satellite broadcasting, or the like, a reproduction signal reproduced from a recording medium such as a hard disk drive (HDD) and a Blu-ray disc, and streaming content distributed from a streaming server in a cloud or the like, for example. Examples of a broadcasting-type video distribution service using a network include IPTV and OTT (Over The Top). In addition, these types of content are supplied to the content reproduction system 100 as a multiplexed bitstream generated by multiplexing bitstreams of respective media data such as a picture, audio, and auxiliary data (subtitles, text, graphics, program information, or the like). It is assumed that the multiplexed bitstream is generated by multiplexing data regarding respective media such as a picture and audio under MPEG2 System Standard, for example.

Note that the content reproduction system 100 is equipped with a tuner for tuning and receiving a broadcasting signal, an HDMI (registered trademark) (High-Definition Multimedia Interface) interface for receiving input of a reproduction signal from a media reproduction device, and a network interface (NIC) for network connection. However, these components are not depicted in FIG. 1.

The content reproduction system 100 includes a demultiplexing unit (demultiplexer) 101, a picture decoding unit 102, an audio decoding unit 103, an auxiliary (Auxiliary) data decoding unit 104, an image quality improving unit 105, a sound quality improving unit 106, an image display unit 107, and an audio output unit 108. For example, the content reproduction system 100 may be a TV receiving device. Alternatively, the content reproduction system 100 may be a terminal device such as a set top box, and may be configured to process a received multiplexed bitstream and output processed picture and audio signals to a TV receiving device including the image display unit 107 and the audio output unit 108.

The demultiplexing unit 101 demultiplexes a multiplexed bitstream received from the outside as a broadcasting signal, a reproduction signal, or streaming data into a picture bitstream, an audio bitstream, and an auxiliary bitstream, and distributes the respective demultiplexed streams to the picture decoding unit 102, the audio decoding unit 103, and the auxiliary data decoding unit 104 disposed in the following stage.

For example, the picture decoding unit 102 decodes an MPEG (Moving Picture Experts Grouop) coded picture bitstream, and outputs a baseband picture signal. Note that the picture signal output from the picture decoding unit 102 is assumed to be a low-resolution or standard-resolution picture, or a low dynamic range (LDR) or standard dynamic range (SDR) picture.

For example, the audio decoding unit 103 decodes an audio bitstream coded by such a coding system as MP3 (MPEG Audio Layer3) and HE-AAC (High Efficiency MPEG4 Advanced Audio Coding), and outputs a baseband audio signal. Note that the audio signal output from the audio decoding unit 103 is assumed to be a low-resolution or standard-resolution audio signal whose partial bandwidth such as a high-tone range has been removed or compressed.

The auxiliary data decoding unit 104 decodes a coded auxiliary bitstream, and outputs subtitles, text, graphics, program information, or the like.

The image quality improving unit 105 performs an image quality improving process for a picture signal output from the picture decoding unit 102 and subtitles, text, graphics, program information, or the like output from the auxiliary data decoding unit 104. A picture signal output from the picture decoding unit 102 is assumed to be a low-resolution or standard-resolution picture, or a low dynamic range or standard dynamic range picture. The image quality improving unit 105 performs such an image quality improving process as a super-resolution process for forming a high-resolution picture signal from a low-resolution or standard-resolution picture signal and high dynamic range rendering. The image quality improving unit 105 may perform the image quality improving process for a picture signal obtained by synthesizing a picture signal output from the picture decoding unit 102 and auxiliary data such as subtitles output from the auxiliary data decoding unit 104, or may perform the image quality improving process individually for the picture signal and the auxiliary data such as subtitles and then perform a synthesizing process for the picture signal and the auxiliary data. In any case, it is assumed that the image quality improving unit 105 performs the super-resolution process or the high dynamic range rendering process within a range of screen resolution or a luminance dynamic range allowed by the image display unit 107 corresponding to an output destination of the picture signal.

According to the present embodiment, it is assumed that the image quality improving unit 105 estimates a super-resolution picture from a low-resolution or standard-resolution picture with use of a neural network which has a learning model learned beforehand by deep learning or the like, or estimates a high dynamic range picture from a low dynamic range or standard dynamic range image.

The sound quality improving unit 106 performs a sound quality improving process for an audio signal output from the audio decoding unit 103. An audio signal output from the audio decoding unit 103 is a low-resolution or standard-resolution audio signal whose partial bandwidth such as a high-tone range has been removed or compressed. The sound quality improving unit 106 performs a sound quality improving process for band-spreading a low-resolution or standard-resolution audio signal into a high resolution (high-resolution) audio signal including a removed or compressed bandwidth, for example.

According to the present embodiment, it is assumed that the sound quality improving unit 106 estimates a high-resolution audio signal from a low-resolution or standard-resolution audio signal with use of a neural network having a learning model learned beforehand by deep learning or the like.

The image display unit 107 presents to a user (content viewing and listening person or the like) a screen which displays a picture for which the image quality improving process has been performed by the image quality improving unit 105. Needless to say, the image display unit 107 may display a picture for which the image quality improving process has not been performed. For example, the image display unit 107 is a display device including a liquid crystal display, an organic EL (Electro-Luminescence) display, or a self-emitting display using minute LED (Light Emitting Diode) elements for pixels (for example, see PTL 3), or the like.

Moreover, the image display unit 107 may be a display device to which a partial driving technology of controlling brightness for each of multiple divided regions of a screen is applied. In a case of a display using a transmission type liquid crystal panel, a backlight corresponding to a high signal level region is configured to emit bright light, while a backlight corresponding to a low signal level region is configured to emit dark light. In this manner, luminance contrast is improved. According to this type of partial drive type display device, a high dynamic range is achievable by further use of a push up technology which distributes power reduced at a dark portion to a high signal level region and achieves intensive light emission at the high signal level region and increase of luminance for partial white display (with output power of the entire backlight kept constant) (for example, see PTL 4).

The audio output unit 108 outputs audio for which the sound quality improving process has been performed by the sound quality improving unit 106. Needless to say, the audio output unit 108 may output an audio signal for which the sound quality improving process has not been performed. The audio output unit 108 includes an acoustic generation element such as a speaker. For example, the audio output unit 108 may be a speaker array combining multiple speakers (multichannel speaker or super-multichannel speaker), or a part or the whole of a speaker may be externally connected to a TV receiving device.

The audio output unit 108 may include a cone type speaker or a flat panel type speaker (for example, see PTL 5). Needless to say, the audio output unit 108 may include a speaker array combining speakers of different types. Moreover, the speaker array may include a speaker which outputs audio by oscillating the image display unit 107 with use of one or more exciters (actuators) generating oscillation. The exciter (actuator) may have a form attached to the image display unit 107 afterwards. FIG. 2 depicts an example of application of a panel speaker technology to a display. A display 200 is supported by a stand 202 at the back. A speaker unit 201 is attached to a back surface of the display 200. An exciter 201-1 disposed at a left end of the speaker unit 201 and an exciter 201-2 disposed at a right end of the speaker unit 201 constitute a speaker array. The exciters 201-1 and 201-2 oscillate the display 200 according to left and right audio signals, respectively, to output acoustic sounds. The stand 202 may have a built-in sub-woofer which outputs acoustic sounds in a low-tone range. Note that the display 200 corresponds to the image display unit 107 using an organic EL element.

FIG. 3 schematically depicts another configuration example of the content reproduction system 300. The content reproduction system 300 in this example is also configured to receive a broadcasting signal, a media reproduction signal, and stream distribution content, and output picture and audio signals. The content reproduction system 300 is equipped with a tuner, an HDMI (registered trademark) interface, a network interface, and the like. However, these components are not depicted in FIG. 3. For example, the content reproduction system 300 is a TV receiving device or a set top box.

The content reproduction system 300 includes a demultiplexing (demultiplexer) and data retrieval unit (Data Retriever) 301, a picture decoding unit 302, an audio decoding unit 303, an auxiliary data decoding unit 304, an image quality improving unit 305, a sound quality improving unit 306, an image display unit 307, and an audio output unit 308. Each of the picture decoding unit 302, the audio decoding unit 303, the auxiliary data decoding unit 304, the image quality improving unit 305, the sound quality improving unit 306, the image display unit 307, and the audio output unit 308 has a function similar to the function of the component having the same name in the content reproduction system 100 depicted in FIG. 1. Accordingly, description of these components is omitted here.

The demultiplexing and data retrieval unit 301 demultiplexes a multiplexed bitstream received from the outside, and performs a process for acquiring data in a cloud via a network interface (not depicted). Generally, data is handled in units of a file. Moreover, a location of a file in a recording medium such as a cloud and a disk is described in the form of a URI (Uniform Resource Indicator) or a URL (Uniform Resource Locator).

As described above, according to the content reproduction system 100 depicted in FIG. 1, the image quality improving unit 105 and the sound quality improving unit 106 perform the image quality improving process and the sound quality improving process, respectively, with use of a neural network which has a learning model learned beforehand by deep learning or the like. This is also applicable to the image quality improving unit 305 and the sound quality improving unit 306 of the content reproduction system 300 depicted in FIG. 3.

Content quality improvement using a learning model that is achieved by a picture super-resolution process, for example, will be described here with reference to FIG. 4.

The image quality improving unit 105 includes filter groups in three layers including a first layer to a third layer. The filter group in the first layer has n₁ types of filters arranged in f₁ × f₁ (e.g., 9 × 9) matrix for each type. Similarly, it is assumed that the filter group in the second layer has n₂ types of filters arranged in f₂ × f₂ matrix for each type and that the filter group in the third layer has filters arranged in f₃ × f₃ matrix.

In a process for the first layer, the n₁ types of the first layer filters in f₁ × f₁ matrix are sequentially applied to an input low-resolution image to generate characteristic maps in n₁ ways.

In a process for the second layer, the n₂ types of the second layer filters in f₂ × f₂ matrix are sequentially applied to the characteristic maps associated with the low-resolution image in n₁ ways to generate high-resolution image characteristic maps in n₂ ways by non-linear mapping.

Thereafter, in a process for the third layer, the adjoining filters in f₃ × f₃ matrix are applied to the high-resolution image characteristic maps in n₂ ways to reconstruct and output a high-resolution image.

Each of the filters used in the super-resolution process described above has a filter coefficient for each matrix element. The filter coefficient referred to here is a concept corresponding to a weighting factor in a learning model.

The super-resolution process depicted in FIG. 4 is only an example of the process to be performed. However, each of super-resolution processing methods using a neural network has a similar network structure constituted by a plurality of layers and having multiple weighting factors for each of the layers.

Moreover, each of an image quality improving process other than super-resolution such as high dynamic range rendering, a sound quality improving process for audio signals, and an image quality improving process for auxiliary data such as subtitles has a similar network structure including multiple layers and having multiple weighting factors for each of the layers in a case where a neural network is applied.

The filter coefficients in each of the layers can be continuously learned by deep learning or the like. However, an enormous volume of learning data is required to perform deep learning. Moreover, a heavy calculation load is imposed by execution of deep learning. Accordingly, it is assumed that filter coefficients of a learning model learned beforehand by such a server as a manufacturer with use of deep learning or the like are set for the image quality improving unit 105 and the sound quality improving unit 106 before shipment of a product corresponding to the content reproduction system 100. Moreover, it is possible here to update the filter coefficients of the learning model learned beforehand, with use of a back propagation (error back propagation) technology or the like, and further continuously learn the learning model learned beforehand. However, re-learning in the shipped content reproduction system 100 is not practical due to a limited volume of available learning data, a limitation imposed by a calculation load, or the like. Likewise, performing re-learning of filter coefficients in the content reproduction system 300 is not practical.

On the other hand, such a server as a manufacturer is allowed to continuously learn the learning model and repeat update of filter coefficients. Accordingly, hereinafter proposed in the present description will be a transfer technology for transferring, to a shipped product, information associated with filter coefficients of a latest learning model obtained by a server or the like through continuous learning.

The transfer technology according to the present proposal is capable of further multiplexing information associated with filter coefficients of a learning model on a multiplexed bitstream generated by multiplexing respective media such as a picture, audio, and auxiliary data, and then transferring the multiplexed bitstream to a predetermined transfer medium. Accordingly, filter coefficients of a learning model updated by a manufacturer of such a device as a TV receiving device, filter coefficients of a learning model updated by a broadcasting station in such a manner as to have the filter coefficients match with broadcasting content for each, and filter coefficients of a learning model updated by a stream provider in such a manner as to have the filter coefficients match with streaming content for each can be multiplexed on a multiplexed bitstream as needed, and provided for such a device as a TV receiving device. Such advantages as easy association between media and filter coefficients of a learning model and easy handling of these media and filter coefficients can also be produced by multiplexing and simultaneously providing data regarding the media and the filter coefficients of the learning model.

Moreover, all of the filter coefficients of the learning model need not be transferred. The learning model may be partially updated by the filter coefficients being transferred in units of a layer or in units of a particular region within a layer.

Furthermore, in a case where information associated with the filter coefficients of the learning model is extracted by demultiplexing of a received multiplexed bitstream on a multiplexed bitstream receiving side such as a TV receiving device, the receiving side is capable of updating a learning model for the image quality improving process or the sound quality improving process as needed in reference to the extracted information.

### Example 1

In a first example, filter coefficients of a learning model to be updated and attribute information associated with the filter coefficients are multiplexed and transferred from a content providing side together with bitstreams of respective media data of a picture, audio, and auxiliary data. It is assumed that, basically, the media and the filter coefficients to be multiplexed are associated with each other.

The attribute information here includes type information associated with the filter coefficients to be updated and position information for specifying the filter coefficients to be updated (e.g., information indicating the layer to be updated or the region in the layer to be updated). Accordingly, learning model updating specific to any one of a picture, audio, or auxiliary data is achievable by designation of the type information. In addition, partial learning model updating in units of a layer or in units of a specific region in the layer is achievable by designation of the position information.

Moreover, according to the first example, in a case where information associated with filter coefficients of a learning model is extracted by demultiplexing of a received multiplexed bitstream, the content receiving side such as a TV receiving device is capable of achieving learning model updating specific to any one of media of a picture, audio, or auxiliary data, in reference to type information designated as attribute information associated with the filter coefficients. Furthermore, partial learning model updating of a specific medium based on position information designated as attribute information is achievable.

FIG. 5 schematically depicts a configuration example of a content reproduction system 500 according to the first example. The content reproduction system 500 is also configured to receive a broadcasting signal, a media reproduction signal, and stream distribution content, and output a picture and audio. The content reproduction system 500 is equipped with a tuner, an HDMI (registered trademark) interface, a network interface, and the like. However, these components are not depicted in FIG. 5. For example, the content reproduction system 500 is a TV receiving device or a set top box.

The content reproduction system 500 includes a demultiplexing unit 501, a picture decoding unit 502, an audio decoding unit 503, an auxiliary data decoding unit 504, a filter coefficient decoding unit 505, an image quality improving unit 506, a sound quality improving unit 507, an image display unit 508, and an audio output unit 509. Each of the picture decoding unit 502, the audio decoding unit 503, the auxiliary data decoding unit 504, the image quality improving unit 506, the sound quality improving unit 507, the image display unit 508, and the audio output unit 509 has a function similar to the function of the component having the same name in the content reproduction system 100 depicted in FIG. 1. Accordingly, description of these components is omitted here.

The demultiplexing unit 501 demultiplexes a multiplexed bitstream received from the outside as a broadcasting signal, a reproduction signal, or streaming data into a picture bitstream, an audio bitstream, an auxiliary bitstream, and a filter coefficient bitstream, and distributes the demultiplexed streams to the picture decoding unit 502, the audio decoding unit 503, the auxiliary data decoding unit 504, and the filter coefficient decoding unit 505 disposed in the following stage. However, a filter coefficient bitstream is not necessarily multiplexed on the received multiplexed bitstream. In this case, no filter coefficient bitstream is supplied to the filter coefficient decoding unit 505.

After extracting attribute information associated with filter coefficients and a data main portion of the filter coefficients by decoding a filter coefficient bitstream coded by a predetermined coding system, the filter coefficient decoding unit 505 supplies the extracted information and data to the image quality improving unit 506. The attribute information contains information associated with data type (e.g., for a moving image, a still image, and graphics) of the transmitted filter coefficients, a data size (e.g., distinction between the whole and a part of a certain layer) of the transmitted filter coefficients, position information associated with the filter coefficients (which layer and what range the data overwrites), and accuracy (e.g., 32-bit floating-point number type, 16-bit integer type, and 8-bit integer type).

The image quality improving unit 506 saves the filter coefficients in the corresponding layer of the corresponding media type or in the designated region in the layer, in reference to the attribute information, to update a learning model in the image quality improving unit 506. Thereafter, the image quality improving unit 506 performs such an image quality improving process as a super-resolution process and high dynamic range rendering for a picture signal output from the picture decoding unit 502, with use of the updated learning model.

Note that FIG. 5 is such an illustration where a decoding result is output from the filter coefficient decoding unit 505 to only the image quality improving unit 506. However, in a case where audio is designated as a media type in the attribute information, it should be understood that the filter coefficient decoding unit 505 supplies the attribute information (type information, position information, or the like) and the filter coefficients to the sound quality improving unit 507, and performs a learning model update process for sound quality improvement in a manner similar to the foregoing manner.

FIG. 6 schematically depicts a multimedia transfer data format for multiplexing and transferring filter coefficients of a learning model and attribute information associated with the filter coefficients together with respective media data such as a picture, audio, and auxiliary data. The filter coefficients of the learning model multiplexed in this transfer data format are data for updating filter coefficients of a learning model associated with quality improvement of any one piece of media data contained in the same transfer data.

The multimedia transfer data format includes data regarding the respective media each given a media header. The respective items of data are sequentially connected with a sequence header indicated by a reference number 601 and disposed at the head. According to the example depicted in FIG. 6, a data main portion of filter coefficients indicated by a reference number 603 is transferred subsequently to a media header of the filter coefficients indicated by a reference number 602. Thereafter, a main portion of audio data indicated by a reference number 605 is transferred subsequently to a media header of the audio indicated by a reference number 604. Subsequently, a media header of picture data and a main portion of picture data, a media header of picture data and a main portion of picture data, and others are sequentially transferred in this order.

When the content reproduction system 500 receives multimedia transfer data including the data format depicted in FIG. 6, the demultiplexing unit 501 is allowed to identify media types of a media data main portion that is to be received immediately after a media header, in reference to this media header, and sequentially allocate the respective media data main portion to the picture decoding unit 502, the audio decoding unit 503, the auxiliary data decoding unit 504, and the filter coefficient decoding unit 505.

Each of FIGS. 7 to 9 depicts a data format example of filter coefficients multiplexed on the multimedia transfer data format depicted in FIG. 6.

Filter coefficient data depicted in FIG. 7 contains, as attribute information, a data type (moving image) indicated by a reference number 701, a data size (the number of sets of filter coefficient data: 1) indicated by a reference number 702, position information (all the filters in the first layer) indicated by a reference number 703, and data accuracy (8-bit integer type) indicated by a reference number 704. In addition, data regarding filter coefficients indicated by a reference number 705 is stored subsequently to the respective items of the attribute information 701 to 704. For example, in a case where n₁ (= 64) types of filters arranged in 9 × 9 matrix for each type in the first layer are present in total, a data portion has a size of 8 × 9 × 9 × 64 = 41,472 bits.

After receiving the attribute information and the filter coefficient data depicted in FIG. 7 from the filter coefficient decoding unit 505, the image quality improving unit 506 overwrites the filter coefficients of all the 64 types of filters in the first layer with the data 705 in reference to the position information to update a learning model in the image quality improving unit 506.

Filter coefficient data depicted in FIG. 8 contains, as attribute information, a data type (moving image) indicated by a reference number 801 and a data size (the number of sets of filter coefficient data: 2) indicated by a reference number 802. According to the example depicted in FIG. 8, two sets of filter coefficient data are contained as media data. In addition, position information associated with filter coefficient data and indicated by a reference number 803 (all the filters in the first layer) and data accuracy (8-bit integer type) indicated by a reference number 804 are contained as the attribute information associated with the first set, and a data main portion of filter coefficient data of the first set indicated by a reference number 805 is subsequently stored.

Further subsequently, position information associated with filter coefficient data and indicated by a reference number 806 (all the filters in the third layer) and data accuracy (16-bit integer type) indicated by a reference number 807 are contained as the attribute information associated with the second set, and a data main portion of filter coefficient data of the second set indicated by a reference number 808 is subsequently stored. For example, in a case where n₂ (= 32) types of filters arranged in 9 × 9 matrix for each type in the second layer are present in total, a data portion has a size of 16 × 9 × 9 × 32 = 41,472 bits.

After receiving the attribute information and the filter coefficient data depicted in FIG. 8 from the filter coefficient decoding unit 505, the image quality improving unit 506 first overwrites the filter coefficients of all the 64 types of filters in the first layer with the data 805 in reference to the position information 803 associated with the set of the first filter coefficient data, to update the learning model in the image quality improving unit 506. Subsequently, the image quality improving unit 506 overwrites the filter coefficients of all the filters in the third layer with the data 808 in reference to the position information 806 associated with the set of the second filter coefficient data, to update the learning model.

Filter coefficient data depicted in FIG. 9 contains, as attribute information, a data type (moving image) indicated by a reference number 901, a data size (the number of sets of filter coefficient data: 1) indicated by a reference number 902, position information (33rd to 64th filters in the filters of the first layer including 64 sets) indicated by a reference number 903, and data accuracy (8-bit integer type) indicated by a reference number 904. In addition, data regarding filter coefficients indicated by a reference number 905 is stored subsequently to the respective items of the attribute information 901 to 904. For example, 33 sets of data from the 33rd to 64th filters in the filters arranged in 9 × 9 matrix in the first layer has a size of 8 × 9 × 9 × 32 = 41,472 bits.

After receiving the attribute information and the filter coefficient data depicted in FIG. 7 from the filter coefficient decoding unit 505, the image quality improving unit 506 overwrites the filter coefficients of the 33rd to 64th filters in the 64 types of filters in the first layer with the data 705 in reference to the position information to update a learning model in the image quality improving unit 506.

FIG. 10 schematically depicts another configuration example of a content reproduction system 1000 according to the first example. The content reproduction system 1000 is also configured to receive a broadcasting signal, a media reproduction signal, and stream distribution content, and output picture and audio signals. The content reproduction system 1000 is equipped with a tuner, an HDMI (registered trademark) interface, a network interface, and the like. However, these components are not depicted in FIG. 10. For example, the content reproduction system 1000 is a TV receiving device or a set top box.

The content reproduction system 1000 includes a demultiplexing and data retrieval unit 1001, a picture decoding unit 1002, an audio decoding unit 1003, an auxiliary data decoding unit 1004, a filter coefficient decoding unit 1005, an image quality improving unit 1006, a sound quality improving unit 1007, an image display unit 1008, and an audio output unit 1009. Each of the picture decoding unit 1002, the audio decoding unit 1003, the auxiliary data decoding unit 1004, the image quality improving unit 1006, the sound quality improving unit 1007, the image display unit 1008, and the audio output unit 1009 has a function similar to the function of the component having the same name in the content reproduction system 300 depicted in FIG. 3. Accordingly, description of these components is omitted here.

The demultiplexing and data retrieval unit 1001 demultiplexes a multiplexed bitstream received from the outside into a picture bitstream, an audio bitstream, an auxiliary bitstream, and a filter coefficient bitstream, and distributes the demultiplexed streams to the picture decoding unit 1002, the audio decoding unit 1003, the auxiliary data decoding unit 1004, and the filter coefficient decoding unit 1005 disposed in the following stage. However, a filter coefficient bitstream is not necessarily multiplexed on the received multiplexed bitstream. In this case, no filter coefficient bitstream is supplied to the filter coefficient decoding unit 1005.

Moreover, the demultiplexing and data retrieval unit 1001 performs a process for acquiring data in a cloud or a recording medium via a network interface (not depicted). Generally, data is handled in units of a file. Moreover, a location of a file in the cloud or the recording medium is described in the form of a URI or a URL.

The filter coefficient decoding unit 1005 decodes a filter coefficient bitstream coded by a predetermined coding system, to extract attribute information associated with the filter coefficients and a data main portion of the filter coefficients. The data main portion of the filter coefficients is not filter coefficient data itself, and stores information indicating a location of a data file describing filter coefficients in the cloud or the recording medium. Accordingly, after acquiring location information described in the URL format, for example, by decoding the filter coefficient bit stream, the filter coefficient decoding unit 1005 acquires a file of the filter coefficient data from the cloud or the recording medium via the demultiplexing and data retrieval unit 1001. Thereafter, the filter coefficient decoding unit 1005 supplies the attribute information associated with the filter coefficients and the data regarding the filter coefficients to the image quality improving unit 1006. The attribute information contains information associated with a data type (e.g., for a moving image, a still image, and graphics) of the transmitted filter coefficients, a data size (e.g., distinction between the whole and a part of a certain layer) of the transmitted filter coefficients, position information associated with the filter coefficients (which layer and what range the data overwrites), and accuracy (e.g., 32-bit floating-point number type, 16-bit integer type, and 8-bit integer type).

The image quality improving unit 1006 saves the filter coefficients in the corresponding layer of the corresponding media type or in the designated region in the layer in reference to the attribute information to update a learning model in the image quality improving unit 1006. Thereafter, the image quality improving unit 1006 performs an image quality improving process such as a super-resolution process and high dynamic range rendering for a picture signal output from the picture decoding unit 1002, with use of the updated learning model.

Note that FIG. 10 is such an illustration where a decoding result is output from the filter coefficient decoding unit 1005 to only the image quality improving unit 1006. However, in a case where audio is designated as a media type in the attribute information, it should be understood that the filter coefficient decoding unit 1005 supplies the attribute information (type information, position information, or the like) and the filter coefficients to the sound quality improving unit 1007, and performs a learning model update process for sound quality improvement in a manner similar to the foregoing manner.

FIG. 11 schematically depicts a multimedia transfer data format for multiplexing and transferring filter coefficients of a learning model and attribute information associated with the filter coefficients, together with respective media data such as a picture, audio, and auxiliary data. The filter coefficients of the learning model multiplexed in this transfer data format are data for updating filter coefficients of a learning model associated with quality improvement of any one piece of media data contained in the same transfer data.

The multimedia transfer data format includes data regarding the respective media each given a media header. The respective items of data are sequentially connected with a sequence header indicated by a reference number 1101 and disposed at the head. According to the example depicted in FIG. 11, a data main portion of filter coefficients indicated by a reference number 1103 is transferred subsequently to a media header of the filter coefficients indicated by a reference number 1102. The data main portion 1103 of the filter coefficients describes information indicating a location of a data file describing the filter coefficients in the cloud or the recording medium in the URL format, for example, as well as the attribute information associated with the filter coefficients. Note that whether the format of the multimedia transfer data is a format storing only the location information as depicted in FIG. 11 or a format storing the filter coefficient data itself as depicted in FIG. 6 may be indicated in the media header 1102.

Thereafter, a main portion of audio data indicated by a reference number 1105 is transferred subsequently to a media header of audio indicated by a reference number 1104. Further, a media header of picture data and a main portion of picture data, a media header of picture data and a main portion of picture data, and others are sequentially transferred in this order.

When the content reproduction system 1000 receives multimedia transfer data including the data format depicted in FIG. 11, the demultiplexing and data retrieval unit 1101 is allowed to identify media types of a media data main portion that is to be received immediately after a media header, in reference to this media header, and sequentially allocate the respective media data main portion to the picture decoding unit 1002, the audio decoding unit 1003, the auxiliary data decoding unit 1004, and the filter coefficient decoding unit 1005. Moreover, after acquiring location information described in the URL format, for example, by decoding the filter coefficient bitstream, the filter coefficient decoding unit 1005 acquires filter coefficient data from the cloud or the recording medium, via the demultiplexing and data retrieval unit 1001. Thereafter, the filter coefficient decoding unit 1005 supplies the attribute information associated with the filter coefficients and the data regarding the filter coefficients to the image quality improving unit 1006.

Each of FIGS. 12 to 14 depicts a data format example of filter coefficients multiplexed on the multimedia transfer data format depicted in FIG. 11.

Filter coefficient data presented in FIG. 12 contains, as attribute information, a data type (moving image) indicated by a reference number 1201, a data size (the number of sets of filter coefficient data: 1) indicated by a reference number 1202, position information (all the filters in the first layer) indicated by a reference number 1203, and data accuracy (8-bit integer type) indicated by a reference number 1204. In addition, location information indicated by a reference number 1205 and associated with a data file describing filter coefficient data in the cloud or the recording medium is stored subsequently to the respective items of the attribute information 1201 to 1204. The location information is described in the form of a URL, for example.

After extracting the attribute information and the location information depicted in FIG. 12 by decoding the filter coefficient bitstream, the filter coefficient decoding unit 1005 acquires full sets of data in the first layer from places indicated by the location information in the cloud or the recording medium via the demultiplexing and data retrieval unit 1001. Thereafter, the filter coefficient decoding unit 1005 supplies the attribute information associated with the filter coefficients and the data regarding the filter coefficients to the image quality improving unit 1006. After receiving the attribute information and the filter coefficient data from the filter coefficient decoding unit 1005, the image quality improving unit 1006 overwrites the filter coefficients of all the 64 types of filters in the first layer with the data 705 in reference to the position information to update a learning model in the image quality improving unit 1006.

Filter coefficient data depicted in FIG. 13 contains, as attribute information, a data type (moving image) indicated by a reference number 1301 and a data size (the number of sets of filter coefficient data: 2) indicated by a reference number 1302. According to the example depicted in FIG. 13, two sets of filter coefficient data are contained as media data. In addition, position information associated with filter coefficient data and indicated by a reference number 1303 (all the filters in the first layer) and data accuracy (8-bit integer type) indicated by a reference number 1304 are contained as the first set of the attribute information, and location information in the cloud or the recording medium indicated by a reference number 1305 and associated with a data file describing the first set of filter coefficient data is subsequently stored as the first set of the attribute information. The location information is described in the form of a URL, for example.

Further subsequently, position information associated with filter coefficient data and indicated by a reference number 1306 (all the filters in the third layer), and data accuracy (16-bit integer type) indicated by a reference number 1307 are contained as the second set of the attribute information, and location information in the cloud or the recording medium indicated by a reference number 1308 and associated with a data file describing the second set of filter coefficient data is subsequently stored as the second set of the attribute information. The location information is described in the form of a URL, for example.

After extracting two sets of attribute information and location information associated with the filter coefficients as depicted in FIG. 13 by decoding the filter coefficient bitstream, the filter coefficient decoding unit 1005 acquires full sets of data regarding filters in the first layer and full sets of data regarding the filters in the third layer from places indicated by the location information in the cloud or the recording medium, via the demultiplexing and data retrieval unit 1001. Thereafter, the filter coefficient decoding unit 1005 supplies the attribute information associated with the filter coefficients and the data regarding the filter coefficients to the image quality improving unit 1006.

After receiving the attribute information and the filter coefficient data from the filter coefficient decoding unit 1005, the image quality improving unit 1006 first overwrites the filter coefficients of all the 64 types of filters in the first layer with the data 805 in reference to the position information 803 associated with the first set of the filter coefficient data, to update a learning model in the image quality improving unit 1006. Subsequently, the image quality improving unit 1006 overwrites the filter coefficients of all the filters in the third layer with the data 808 in reference to the position information 806 associated with the second set of the filter coefficient data, to update the learning model.

Filter coefficient data depicted in FIG. 14 contains, as attribute information, a data type (moving image) indicated by a reference number 1401, a data size (the number of sets of filter coefficient data: 1) indicated by a reference number 1402, position information (33rd to 64th filters in the filters of the first layer including 64 sets) indicated by a reference number 1403, and data accuracy (8-bit integer type) indicated by a reference number 1404. In addition, location information in the cloud or the recording medium indicated by a reference number 1405 and associated with a data file describing filter coefficient data is stored subsequently to the respective items of the attribute information 1201 to 1204. The location information is described in the form of a URL, for example.

After extracting the attribute information and the location information depicted in FIG. 14 by decoding the filter coefficient bitstream, the filter coefficient decoding unit 1005 acquires the 33rd to 64th filter coefficient data in the filters including 64 sets in the first layer from places indicated by the location information in the cloud or the recording medium, via the demultiplexing and data retrieval unit 1001. Thereafter, the filter coefficient decoding unit 1005 supplies the attribute information associated with the filter coefficients and the data regarding the filter coefficients to the image quality improving unit 1006. After receiving the attribute information and the filter coefficient data from the filter coefficient decoding unit 1005, the image quality improving unit 1006 overwrites the filter coefficients of the 33rd to 64th filters in the 64 types of filters in the first layer with the data 705 in reference to the position information to update the learning model in the image quality improving unit 1006.

FIG. 15 presents a processing procedure in the form of a flowchart, executed by the content reproduction system 1000 according to the first example at the time of reception of a multiplexed bitstream.

When the content reproduction system 1000 receives a multiplexed bitstream (step S1501), the demultiplexing and data retrieval unit 1001 first demultiplexes the multiplexed bitstream into bitstreams of respective media, in reference to information described in a media header given to the head of the media data (step S1502), and distributes the respective bitstreams to the picture decoding unit 1002, the audio decoding unit 1003, the auxiliary data decoding unit 1004, and the filter coefficient decoding unit 1005 disposed in the following stage.

Here, in a case where the demultiplexed bitstream is a bitstream other than filter coefficients, i.e., a bitstream of any one of a picture, audio, or auxiliary data (No in step S1503), the bitstream is allocated to the corresponding decoding unit of the picture decoding unit 1002, the audio decoding unit 1003, and the auxiliary data decoding unit 1004. Decoding processes performed by the picture decoding unit 1002, the audio decoding unit 1003, and the auxiliary data decoding unit 1004 are known in the corresponding fields, and are not directly related to the technology proposed in the present description. Accordingly, detailed description of these processes is omitted.

Thereafter, in a case where the demultiplexed bitstream is a bitstream of filter coefficients (Yes in step S1503), the filter coefficient decoding unit 1005 analyzes a media header (step S1504), and further acquires attribute information (type, size, position, accuracy, and the like) associated with the filter coefficients.

Subsequently, the filter coefficient decoding unit 1005 checks whether data regarding the filter coefficients designated by the attribute information (corresponding to an update target of current multimedia transfer data) is stored in the same multimedia transfer data, in reference to information in the media header or the like (step S1505). Alternatively, the filter coefficient decoding unit 1005 checks whether location information associated with the filter coefficient data is stored in the multimedia transfer data.

Here, in a case where the data regarding the filter coefficients is not stored in the same multimedia transfer data (No in step S1505), the filter coefficient decoding unit 1005 acquires location information such as a URL extracted from the filter coefficient bitstream (step S1506).

Thereafter, the filter coefficient decoding unit 1005 acquires a file of filter coefficient data from a cloud or a recording medium designated by the location information such as a URL, or acquires filter coefficient data from the filter coefficient bitstream (step S1507), and supplies the acquired file or data to the image quality improving unit 1006 together with the attribute information.

The image quality improving unit 1006 saves the filter coefficients in the corresponding layer of the corresponding media type or in the designated region in the layer in reference to the attribute information to update a learning model in the image quality improving unit 1006 (step S1508).

Thereafter, the image quality improving unit 1006 performs an image quality improving process for a picture signal output from the picture decoding unit 1002, with use of the updated learning model (step S1509). For example, the image quality improving unit 1006 performs an image quality improving process such as a super-resolution process for forming a high-resolution picture signal from a low-resolution or standard-resolution picture signal and high dynamic range rendering.

FIG. 16 schematically depicts a configuration example of a content coding system 1600 for coding multimedia transfer data including the format depicted in FIG. 6. The content coding system 1600 depicted in the figure is configured to code a picture signal as media data, and also configured to learn beforehand filter coefficients (weighting factors of a learning model) for improving image quality of the picture signal, and multiplex a coded picture bitstream, the filter coefficients, and attribute information to generate transfer data in the data format depicted in FIG. 6.

For example, a 4K high-resolution picture stream is input to the content coding system 1600. A down sampler 1601 down-samples this high-resolution picture stream to a 2K low-resolution (or standard-resolution) picture stream.

A picture coding unit 1602 performs a coding process in, for example, a predetermined coding system such as MPEG for the low-resolution picture stream input from the down sampler 1601, and outputs a coded picture stream.

A picture decoding unit 1603 decodes the coded picture stream output from the picture coding unit 1602, to reproduce the low-resolution (2K) picture stream.

Thereafter, a filter coefficient learner 1604 receives input of a high-resolution (4K) original picture and a decoded low-resolution (2K) picture, and performs pre-learning of a learning model for performing a super-resolution process which converts the low-resolution (2K) picture into the high-resolution (4K) picture for image quality improvement.

As already described with reference to FIG. 4, the neural network performing the super-resolution process has a filter group in three layers including the first layer to the third layer, for example. The filter group in the first layer has n₁ types of filters arranged in f₁ × f₁ (e.g., 9 × 9) matrix for each type. Similarly, the filter group in the second layer has n₂ types of filters arranged in f₂ × f₂ matrix for each type, while the filter group in the third layer has filters arranged in f₃ × f₃ matrix.

The filter coefficient learner 1604 learns beforehand filter coefficients of the respective layers of the first layer to the third layer for the super-resolution process, by using the decoded low-resolution (2K) picture and the high-resolution (4K) original picture as learning data, and outputs the filter coefficients and attribute information associated with the filter coefficients. For example, in a case where the original picture is divided into multiple picture sections such as a section A and a section B, the filter coefficient learner 1604 is allowed to learn the original picture beforehand for each of the picture sections and output the filter coefficients and the attribute information associated with the filter coefficients for each of the picture sections.

The multiplexing unit 1605 multiplexes the coded picture bitstream, the filter coefficients, and the attribute information in a transfer direction in a time-division manner to generate transfer data in the data format depicted in FIG. 6. For example, in a case where the original picture is divided into multiple picture sections such as a section A and a section B, the multiplexing unit 1605 may multiplex picture data divided into the picture sections and the filter coefficients and the attribute information associated with the filter coefficients that are learned beforehand for each of the picture sections, to generate transfer data.

FIG. 17 depicts a configuration example of transfer data output from the multiplexing unit 1605. The multimedia transfer data format includes data regarding the respective media each given a media header. The respective items of data are sequentially connected with a sequence header indicated by a reference number 1701 and disposed at the head. According to the example depicted in FIG. 17, filter coefficient data that is indicated by a reference number 1703 and that corresponds to the section A of the picture data is transferred subsequently to a media header of the filter coefficients indicated by a reference number 1702. Thereafter, picture data of the section A indicated by a reference number 1705 is transferred subsequently to a media header of a picture indicated by a reference number 1704. In this manner, handling of the data is facilitated by association of the picture data and the filter coefficients to be multiplexed with each other.

FIG. 18 depicts an internal configuration example of the filter coefficient learner 1604.

The filter coefficient learner 1604 includes a convolutional neural network (Convolutional Neural Network: CNN) 1804 for super-resolution including a first layer filter 1801, a second layer filter 1802, and a third layer filter 1803. As already described with reference to FIG. 4, the filter group in the first layer has n₁ types of filters arranged in f₁ × f₁ (e.g., 9 × 9) matrix for each type. Similarly, the filter group in the second layer has n₂ types of filters arranged in f₂ × f₂ matrix for each type, and the filter group in the third layer has filters arranged in f₃ × f₃ matrix.

The convolutional neural network 1804 performs a super-resolution process for a low-resolution (2K) picture stream decoded after being coded by the picture coding unit 1602, to generate a high-resolution (4K) picture stream.

A difference calculator 1805 calculates a difference between the picture stream obtained by the super-resolution process and the high-resolution (4K) original picture stream. Thereafter, an error back propagation unit 1806 generates change information associated with filter coefficients of the filters 1801 to 1803 in the respective layers, in reference to this difference information, and performs back propagation, i.e., corrects the filter coefficients of the filters 1801 to 1803 in the respective layers.

The filter coefficients for each picture section can be learned (learned beforehand) by repeated performance of such an error back propagation process in each of the picture sections. In such a manner, filter coefficients and attribute information associated with the filter coefficients learned by the convolutional neural network 1804 are output to the multiplexing unit 1650.

For example, the content coding system 1600 is disposed and operated at a content distribution source such as a broadcasting station and a streaming server in a cloud.

It should be noted that, while the picture signal and the learned filter coefficients for improving quality of the picture signal (i.e., improving image quality) are multiplexed in the configuration example of the content coding system 1600 depicted in FIG. 16, a configuration of a content coding system handling multimedia can be produced by adding a learner for quality improvement for each of other media data and media types such as an audio signal and auxiliary data. Specifically, a content coding system handling multimedia is capable of generating multimedia transfer data by multiplexing multiple items of media data, filter coefficients for each media data, and attribute information associated with the filter coefficients.

### Example 2

Also in a second example, filter coefficients of a learning model to be updated and attribute information associated with the filter coefficients are multiplexed and transferred from a content providing side together with bitstreams of respective media data of a picture, audio, and auxiliary data, as in the first example. However, the second example is mainly characterized in that filter coefficients are given time information and transferred.

The time information given to the filter coefficients is also called a time code or a time stamp, and is the same type of time code as a time code for controlling media (e.g., picture stream) to which the filter coefficients are applied. Accordingly, from which position of a target medium (e.g., from which frame of a picture) the filter coefficients multiplexed and transferred together with the respective media are to be applied can be designated using the time code.

A content providing side controls a data volume of the filter coefficients to be transferred and timing of multiplexing the filter coefficients on bitstreams of respective media data, to transfer beforehand necessary filter coefficients before the timing of activation of the filter coefficients (activation time for starting application to the target medium) on a content receiving side. Transfer of a large volume of filter coefficients in a long transfer period (e.g., nighttime in which a TV receiving device is not used) is achievable before the activation time, by controlling the transfer of the filter coefficients beforehand and the activation time and dividing the transfer into multiple transfer times in units of a desired small size (e.g., a fixed volume such as 100 bytes, or a unit produced by equally dividing filter coefficients in one layer by N).

Moreover, according to the second example, the content receiving side such as a TV receiving device includes a filter coefficient memory for storing filter coefficients acquired before the activation time and a controller for controlling input and output to and from the filter coefficient memory. In addition, in a case where information associated with filter coefficients of a learning model is extracted together with information associated with the activation time by demultiplexing of a received multiplexed bitstream, the controller temporarily stores the filter coefficients in the filter coefficient memory in reference to the extracted information. When the activation time comes, the controller extracts the filter coefficients from the filter coefficient memory, and starts application of a quality improving process (e.g., a super-resolution process for a low-resolution picture signal) for a target medium to the extracted filter coefficients.

FIG. 19 schematically depicts a configuration example of a content reproduction system 1900 according to the second example. The content reproduction system 1900 is also configured to receive a broadcasting signal, a media reproduction signal, and stream distribution content, and output picture and audio signals. The content reproduction system 1900 is equipped with a tuner, an HDMI (registered trademark) interface, a network interface, and the like. However, these components are not depicted in FIG. 19. For example, the content reproduction system 1900 is a TV receiving device or a set top box.

The content reproduction system 1900 includes a demultiplexing unit 1901, a picture decoding unit 1902, an audio decoding unit 1903, an auxiliary data decoding unit 1904, a filter coefficient decoding unit 1905, an image quality improving unit 1906, a sound quality improving unit 1907, a controller 1908, a filter coefficient memory 1909, an image display unit 1910, and an audio output unit 1911. Each of the picture decoding unit 1902, the audio decoding unit 1903, the auxiliary data decoding unit 1904, the image quality improving unit 1906, the sound quality improving unit 1907, the image display unit 1910, and the audio output unit 1911 has a function similar to the function of the component having the same name in the content reproduction system 100 depicted in FIG. 1. Accordingly, description of these components is omitted here.

The demultiplexing unit 1901 demultiplexes a multiplexed bitstream received from the outside as a broadcasting signal, a reproduction signal, or streaming data into a picture bitstream, an audio bitstream, an auxiliary bitstream, and a filter coefficient bitstream, and distributes the demultiplexed streams to the picture decoding unit 1902, the audio decoding unit 1903, the auxiliary data decoding unit 1904, and the filter coefficient decoding unit 1905 disposed in the following stage. However, a filter coefficient bitstream is not necessarily multiplexed on the received multiplexed bitstream. In this case, no filter coefficient bitstream is supplied to the filter coefficient decoding unit 1905.

The filter coefficient decoding unit 1905 performs a decoding process for a filter coefficient bitstream coded by a predetermined coding system, to extract attribute information associated filter coefficients, a data main portion of the filter coefficients, and an activation time, and supplies the extracted information, data, and activation time to the controller 1908. The attribute information contains information associated with a data type (e.g., for a moving image, a still image, and graphics) of the transmitted filter coefficients, a data size (e.g., distinction between the whole and a part of a certain layer) of the transmitted filter coefficients, position information associated with the filter coefficients (which layer and what range the data overwrites), and accuracy (e.g., 32-bit floating-point number type, 16-bit integer type, and 8-bit integer type). Moreover, the activation time is a time at which start of application of the filter coefficients to the target medium is designated (a picture stream is an application target in the example depicted in FIG. 19).

The controller 1908 controls input to and output from the filter coefficient memory 1909. Specifically, after receiving the filter coefficients, attribute information associated with the filter coefficients, and the activation time from the filter coefficient decoding unit 1905, the controller 1908 temporarily stores the filter coefficients and the attribute information associated with the filter coefficients in the filter coefficient memory 1909 (only in a case where the filter coefficients and the attribute information are acquired before the activation time). Thereafter, when the activation time comes, the controller 1908 reads the filter coefficients and the attribute information associated with the filter coefficients from the filter coefficient memory 1909, and supplies the filter coefficients and the attribute information to the image quality improving unit 1906.

The image quality improving unit 1906 saves the filter coefficients in the corresponding layer of the corresponding media type or in the designated region in the layer in reference to the attribute information to update a learning model in the image quality improving unit 1906. Thereafter, the image quality improving unit 1906 performs an image quality improving process such as a super-resolution process and high dynamic range rendering for a picture signal output from the picture decoding unit 1902, with use of the updated learning model.

Accordingly, the content reproduction system 1900 is capable of storing filter coefficients transferred before the activation time in the filter coefficient memory 1909, and starting an image quality improving process to which the filter coefficients are applied from the time designated by the activation time.

Note that FIG. 19 is such an illustration where the filter coefficients and the attribute information temporarily stored in the filter coefficient memory 1909 are output to only the image quality improving unit 1906 by the controller 1908. However, in a case where audio is designated as a media type in the attribute information, it should be understood that the controller 1908 supplies the attribute information (type information, position information, or the like) and the filter coefficients to the sound quality improving unit 1907, and performs a learning model update process for sound quality improvement in a manner similar to the foregoing manner.

FIG. 20 schematically depicts a multimedia transfer data format for multiplexing and transferring filter coefficients of a learning model and attribute information associated with the filter coefficients, together with respective media data such as a picture, audio, and auxiliary data. The filter coefficients of the learning model multiplexed in this transfer data format are data for updating filter coefficients of a learning model associated with quality improvement of any one piece of media data contained in the same transfer data.

The multimedia transfer data format includes data regarding the respective media each given a media header. The respective items of data are sequentially connected with a sequence header indicated by a reference number 2001 and disposed at the head. According to the example depicted in FIG. 20, a time code designating start of application of the filter coefficients is given to a media header indicated by a reference number 2002 and associated with the filter coefficients. Immediately after the time code, data 1-1 indicated by a reference number 2003 and associated with the filter coefficients is transferred. Thereafter, a main portion of audio data indicated by a reference number 2005 is transferred subsequently to a media header of audio indicated by a reference number 2004. Further, a time code designating start of application of the filter coefficients is given to a subsequent media header indicated by a reference number 2006 and associated with the filter coefficients. Immediately after the time code, data 1-2 indicated by a reference number 2007 and associated with the filter coefficients is transferred.

When the content reproduction system 1900 receives multimedia transfer data including the data format depicted in FIG. 20, the demultiplexing unit 1901 is allowed to identify media types of a media data main portion that is to be received immediately after a media header, in reference to this media header, and sequentially allocate the respective media data main portion to the picture decoding unit 1902, the audio decoding unit 1903, the auxiliary data decoding unit 1904, and the filter coefficient decoding unit 1905.

After extracting the activation time designated by the time code of the media header, the attribute information associated with the filter coefficients, and the data 1-1 regarding the filter coefficients by performing a decoding process for the filter coefficient bitstream coded by a predetermined coding system, the filter coefficient decoding unit 1905 supplies the activation time, the attribute information, and the data 1-1 thus extracted to the controller 1908. Thereafter, the controller 1908 temporarily stores the data 1-1 regarding the filter coefficients and the attribute information associated with the filter coefficients received from the filter coefficient decoding unit 1905 in the filter coefficient memory 1909.

Subsequently, in a case where the activation time designated by the time code of the media header, the attribute information associated with the filter coefficients, and the data 1-2 regarding the filter coefficients are extracted from the coded filter coefficient bitstream, the filter coefficient decoding unit 1905 supplies the respective extracted items to the controller 1908 in a similar manner. Thereafter, the controller 1908 temporarily stores the attribute information associated with the filter coefficients and the data 1-2 regarding the filter coefficients in the filter coefficient memory 1909 until the activation time.

Thereafter, when the activation time comes, the controller 1908 reads the data 1-1 and data 1-2 regarding the filter coefficients and the attribute information associated with the respective data 1-1 and data 1-2 from the filter coefficient memory 1909, and supplies the data 1-1 and data 1-2 and the attribute information to the image quality improving unit 1906.

FIG. 21 depicts a data format example of the data 1-1 regarding the filter coefficients multiplexed on the multimedia transfer data depicted in FIG. 20.

Filter coefficient data depicted in FIG. 21 contains, as attribute information, a data type (moving image) indicated by a reference number 2101, a time code (applied from a second frame of the picture stream) indicated by a reference number 2102, a data size (the number of sets of filter coefficient data: 1) indicated by a reference number 2103, position information (filters from the head to the 32nd in the first layer) indicated by a reference number 2104, and data accuracy (8-bit integer type) indicated by a reference number 2105. In addition, data regarding the filter coefficients indicated by a reference number 2106 is stored subsequently to the respective items of the attribute information 2101 to 2105. For example, in a case of 32 sets of filters in 9 × 9 matrix in the first layer, a data portion has a size of 8 × 9 × 9 × 32 = 20,736 bits.

In addition, FIG. 22 depicts a data format example of the data 1-2 regarding the filter coefficients multiplexed on the multimedia transfer data depicted in FIG. 20.

Filter coefficient data depicted in FIG. 22 contains, as attribute information, a data type (moving image) indicated by a reference number 2201, a time code (applied from a second frame of the picture stream) indicated by a reference number 2202, a data size (the number of sets of filter coefficient data: 1) indicated by a reference number 2203, position information (33rd to final 64th filters in the first layer) indicated by a reference number 2204, and data accuracy (8-bit integer type) indicated by a reference number 2205. In addition, data regarding the filter coefficients indicated by a reference number 2206 is stored subsequently to the respective items of the attribute information 2201 to 2205.

According to the data format examples depicted in FIGS. 21 and 22, the first half 32 sets of the filter coefficients of the first layer are transferred by the data 1-1 regarding the filter coefficients, and the second half 32 sets of the filter coefficients of the first layer are transferred by the data 1-2 regarding the filter coefficients. Thereafter, it is designated that application of the filter coefficients of all the filters of the first layer transferred by the data 1-1 and data 1-2 regarding the filter coefficients be started at an activation time (a second frame of the picture stream) designated by the time code.

After sequentially receiving the data 1-1 and data 1-2 regarding the filter coefficients depicted in FIGS. 21 and 22 from the filter coefficient decoding unit 1905, the controller 1908 sequentially stores the data 1-1 and data 1-2 in the filter coefficient memory 1909. Thereafter, when the activation time designated by the time code comes, the controller 1908 reads the data 1-1 and data 1-2 regarding the filter coefficients from the filter coefficient memory 1909, and passes the data 1-1 and data 1-2 to the image quality improving unit 1906. The image quality improving unit 1906 overwrites the filter coefficients of all the filters of the first layer received from the controller 1908, to update a learning model in the image quality improving unit 1906, and applies the updated learning model to the second frame of the picture frame at the activation time and the following frames.

FIG. 23 schematically depicts another configuration example of a content reproduction system 2300 according to the second example. The content reproduction system 2300 is also configured to receive a broadcasting signal, a media reproduction signal, and stream distribution content, and output picture and audio signals. The content reproduction system 2300 is equipped with a tuner, an HDMI (registered trademark) interface, a network interface, and the like. However, these components are not depicted in FIG. 23. For example, the content reproduction system 2300 is a TV receiving device or a set top box.

The content reproduction system 2300 includes a demultiplexing and data retrieval unit 2301, a picture decoding unit 2302, an audio decoding unit 2303, an auxiliary data decoding unit 2304, a filter coefficient decoding unit 2305, an image quality improving unit 2306, a sound quality improving unit 2307, a controller 2308, a filter coefficient memory 2309, an image display unit 2310, and an audio output unit 2311. Each of the picture decoding unit 2302, the audio decoding unit 2303, the auxiliary data decoding unit 2304, the image quality improving unit 2306, the sound quality improving unit 2307, the image display unit 2310, and the audio output unit 2311 has a function similar to the function of the component having the same name in the content reproduction system 300 depicted in FIG. 3. Accordingly, description of these components is omitted here.

The demultiplexing and data retrieval unit 2301 demultiplexes a multiplexed bitstream received from the outside into a picture bitstream, an audio bitstream, an auxiliary bitstream, and a filter coefficient bitstream, and distributes the demultiplexed streams to the picture decoding unit 2302, the audio decoding unit 2303, the auxiliary data decoding unit 2304, and the filter coefficient decoding unit 2305 disposed in the following stage. However, a filter coefficient bitstream is not necessarily multiplexed on the received multiplexed bitstream. In this case, no filter coefficient bitstream is supplied to the filter coefficient decoding unit 2305.

Moreover, the demultiplexing and data retrieval unit 2301 performs a process for acquiring data in a cloud or a recording medium via a network interface (not depicted). Generally, data is handled in units of a file. Moreover, a location of a file in the cloud or the recording medium is described in the form of a URI or a URL.

The filter coefficient decoding unit 2305 performs a decoding process for a filter coefficient bitstream coded by a predetermined coding system, to extract attribute information associated with filter coefficients, a data main portion of the filter coefficients, and an activation time. The data main portion of the filter coefficients is not filter coefficient data itself, and stores information indicating a location of a data file describing filter coefficients in the cloud or the recording medium. Accordingly, after acquiring location information described in the URL format, for example, by decoding the filter coefficient bit stream, the filter coefficient decoding unit 2305 acquires a file of the filter coefficient data from the cloud or the recording medium via the demultiplexing and data retrieval unit 2301. Thereafter, the filter coefficient decoding unit 2305 supplies the attribute information associated with the filter coefficients and the data regarding the filter coefficients to the controller 2308. The attribute information contains information associated with a data type (e.g., for a moving image, a still image, and graphics) of the transmitted filter coefficients, a data size (e.g., distinction between the whole and a part of a certain layer) of the transmitted filter coefficients, position information associated with the filter coefficients (which layer and what range the data overwrites), and accuracy (e.g., 32-bit floating-point number type, 16-bit integer type, and 8-bit integer type). Moreover, the activation time is a time at which start of application of the filter coefficients to the target medium is designated (a picture stream is an application target in the example depicted in FIG. 23).

The controller 2308 controls input to and output from the filter coefficient memory 2309. Specifically, the controller 2308 receives the filter coefficients, the attribute information associated with the filter coefficients, and the activation time from the filter coefficient decoding unit 2305, and temporarily stores the filter coefficients and the attribute information associated with the filter coefficients in the filter coefficient memory 2309 (only in a case where the filter coefficients and the attribute information are acquired before the activation time). In addition, when the activation time comes, the controller 2308 reads the filter coefficients and the attribute information associated with the filter coefficients from the filter coefficient memory 2309, and supplies the filter coefficients and the attribute information thus read to the image quality improving unit 2306.

The image quality improving unit 2306 saves the filter coefficients in the corresponding layer of the corresponding media type or in the designated region in the layer in reference to the attribute information to update a learning model in the image quality improving unit 2306. Thereafter, the image quality improving unit 2306 performs an image quality improving process such as a super-resolution process and high dynamic range rendering for a picture signal output from the picture decoding unit 2302, with use of the updated learning model.

Accordingly, the content reproduction system 2300 is capable of storing filter coefficients transferred before the activation time in the filter coefficient memory 2309, and starting an image quality improving process to which the filter coefficients are applied from the time designated by the activation time.

Note that FIG. 23 is such an illustration where the filter coefficients and the attribute information temporarily stored in the filter coefficient memory 2309 are output to only the image quality improving unit 2306 by the controller 2308. However, in a case where audio is designated as a media type in the attribute information, it should be understood that the controller 2308 supplies the attribute information (type information, position information, or the like) and the filter coefficients to the sound quality improving unit 2307, and performs a learning model update process for sound quality improvement in a manner similar to the foregoing manner.

FIG. 24 schematically depicts a multimedia transfer data format for multiplexing and transferring filter coefficients of a learning model and attribute information associated with the filter coefficients, together with respective media data such as a picture, audio, and auxiliary data. The filter coefficients of the learning model multiplexed in this transfer data format are data for updating filter coefficients of a learning model associated with quality improvement of any one piece of media data contained in the same transfer data.

The multimedia transfer data format includes data regarding the respective media each given a media header. The respective items of data are sequentially connected with a sequence header indicated by a reference number 2401 and disposed at the head. According to the example depicted in FIG. 24, a time code designating start of application of the filter coefficients is given to a media header indicated by a reference number 2402 and associated with the filter coefficients. Immediately after the time code, information describing a location of a data file of data 1-1 in a cloud or a recording medium in the URL format, for example, is transferred as the data main portion associated with the filter coefficients and indicated by a reference number 2403, together with the attribute information associated with the data 1-1. Thereafter, an audio data main portion indicated by a reference number 2405 is transferred subsequently to a media header of audio indicated by a reference number 2404. Further, a time code designating start of application of the filter coefficients is given to a subsequent media header indicated by a reference number 2406 and associated with the filter coefficients. Immediately after the time code, information describing a location of a data file of data 1-2 in the cloud or the recording medium in the URL format, for example, is transferred as the data main portion associated with the filter coefficients and indicated by a reference number 2407, together with the attribute information associated with the data 1-2.

When the content reproduction system 2300 receives multimedia transfer data including the data format depicted in FIG. 24, the demultiplexing and data retrieval unit 2301 is allowed to identify media types of a media data main portion that is to be received immediately after a media header, in reference to this media header, and sequentially allocate the respective media data main portion to the picture decoding unit 2302, the audio decoding unit 2303, the auxiliary data decoding unit 2304, and the filter coefficient decoding unit 2305.

After extracting the activation time designated by the time code of the media header, the attribute information associated with the filter coefficients, and the location information associated with the data 1-1 regarding the filter coefficients by performing a decoding process for the filter coefficient bitstream coded by a predetermined coding system, the filter coefficient decoding unit 2305 acquires the data 1-1 regarding the filter coefficients from the cloud or the recording medium via the demultiplexing and data retrieval unit 2301. Thereafter, the filter coefficient decoding unit 2305 supplies the activation time, the attribute information associated with the filter coefficients, and the data 1-1 regarding the filter coefficients to the controller 2308. The controller 2308 temporarily stores the data 1-1 regarding the filter coefficients and the attribute information associated with the filter coefficients received from the filter coefficient decoding unit 2305 in the filter coefficient memory 2309.

Subsequently, in a case where the filter coefficient decoding unit 2305 extracts the activation time designated by the time code of the media header, the attribute information associated with the filter coefficients, and the location information associated with the data 1-2 regarding the filter coefficients by performing a decoding process for the filter coefficient bitstream coded by the predetermine coding system, the filter coefficient decoding unit 2305 similarly acquires the data 1-2 regarding the filter coefficients from the cloud or the recording medium via the demultiplexing and data retrieval unit 2301, and supplies the activation time, the attribute information associated with the filter coefficients, and the data 1-1 regarding the filter coefficients to the controller 2308. The controller 2308 temporarily stores the data 1-2 regarding the filter coefficients and the attribute information associated with the filter coefficients received from the filter coefficient decoding unit 2305 in the filter coefficient memory 2309.

Thereafter, when the activation time comes, the controller 2308 reads the data 1-1 and data 1-2 regarding the filter coefficients and the attribute information associated with the respective data 1-1 and data 1-2 from the filter coefficient memory 2309, and supplies the data 1-1 and data 1-2 and the attribute information thus read to the image quality improving unit 2306.

FIG. 25 presents a data format example of the data 1-1 regarding the filter coefficients multiplexed on the multimedia transfer data depicted in FIG. 24.

Filter coefficient data depicted in FIG. 25 contains, as attribute information, a data type (moving image) indicated by a reference number 2501, a time code (applied from a second frame of the picture stream) indicated by a reference number 2502, a data size (the number of sets of filter coefficient data: 1) indicated by a reference number 2503, position information (filters from the head to the 32nd in the first layer) indicated by a reference number 2504, and data accuracy (8-bit integer type) indicated by a reference number 2505. In addition, location information in the cloud or the recording medium indicated by a reference number 2506 and associated with a data file describing the data 1-1 regarding filter coefficients is stored subsequently to the respective items of the attribute information 2501 to 2505. The location information is described in the form of a URL, for example.

In addition, FIG. 26 depicts a data format example of the data 1-2 regarding the filter coefficients multiplexed on the multimedia transfer data depicted in FIG. 24.

Filter coefficient data depicted in FIG. 26 contains, as attribute information, a data type (moving image) indicated by a reference number 2601, a time code (applied from a second frame of the picture stream) indicated by a reference number 2602, a data size (the number of sets of filter coefficient data: 1) indicated by a reference number 2603, position information (33rd to final 64th filters in the first layer) indicated by a reference number 2604, and data accuracy (8-bit integer type) indicated by a reference number 2605. In addition, location information in the cloud or the recording medium indicated by a reference number 2206 and associated with a data file describing the data regarding filter coefficients is stored subsequently to the respective items of the attribute information 2601 to 2605. The location information is described in the form of a URL, for example.

According to the data format examples depicted in FIGS. 25 and 26, location information associated with the filter coefficient data of the first half 32 sets of the filter coefficients of the first layer is transferred by the data 1-1 regarding the filter coefficients, and location information associated with the second half 32 sets of the filter coefficients of the first layer is transferred by the data 1-2 regarding the filter coefficients. It is further designated that application of the filter coefficients of all the filters of the first layer acquirable by the respective data 1-1 and data 1-2 regarding the filter coefficients in reference to the location information be started at the activation time (a second frame of the picture stream) designated by the time code.

The filter coefficient decoding unit 2305 sequentially acquires the filter coefficients via the demultiplexing and data retrieval unit 2301 in reference to the location information indicated by the respective data 1-1 and data 1-2 regarding the filter coefficients, and passes the acquired filter coefficients to the controller 2308 together with the activation time and the attribute information. After sequentially receiving the first half and second half filter coefficients of the first layer filters and the attribute information associated with these filter coefficients from the filter coefficient decoding unit 2305, the controller 2308 sequentially stores the filter coefficients and the attribute information in the filter coefficient memory 2309. Thereafter, when the activation time designated by the time code comes, the controller 2308 reads the first half and second half filter coefficients of the first layer filters from the filter coefficient memory 2309, and passes the read filter coefficients to the image quality improving unit 2306. The image quality improving unit 2306 overwrites the filter coefficients of all the filters of the first layer received from the controller 2308, to update a learning model in the image quality improving unit 2306, and applies the updated learning model to the second frame of the picture frame corresponding to the activation time and the following frames. In addition, it is assumed that the activation time designated by the time code is a display time of a picture frame transferred after the transfer of the data 1-1 and data 1-2 regarding the filter coefficients.

FIG. 27 presents a processing procedure in the form of a flowchart, executed by the content reproduction system 2300 according to the second example at the time of reception of a multiplexed bitstream.

When the content reproduction system 2300 receives a multiplexed bitstream (step S2701), the demultiplexing and data retrieval unit 2301 first demultiplexes the multiplexed bitstream into bitstreams of respective media in reference to information described in a media header given to the head of the media data (step S2702), and distributes the respective bitstreams to the picture decoding unit 2302, the audio decoding unit 2303, the auxiliary data decoding unit 2304, and the filter coefficient decoding unit 2305 disposed in the following stage.

Here, in a case where the demultiplexed bitstream is a bitstream other than filter coefficients, i.e., a bitstream of any one of a picture, audio, or auxiliary data (No in step S2703), the bitstream is allocated to the corresponding decoding unit of the picture decoding unit 2302, the audio decoding unit 2303, and the auxiliary data decoding unit 2304. Decoding processes performed for the picture decoding unit 2302, the audio decoding unit 2303, and the auxiliary data decoding unit 2304 are known in the corresponding fields, and are not directly related to the technology proposed in the present description. Accordingly, detailed description of these processes is omitted.

Thereafter, in a case where the demultiplexed bitstream is a bitstream of filter coefficients (Yes in step S2703), the filter coefficient decoding unit 2305 analyzes a media header (step S2704), and further acquires attribute information (type, size, position, accuracy, and the like) associated with the filter coefficients.

Subsequently, the filter coefficient decoding unit 2305 checks whether data regarding the filter coefficient designated by the attribute information (corresponding to an update target of current multimedia transfer data) is stored in the same multimedia transfer data, in reference to information contained in the media header or the like (step S2705). Alternatively, the filter coefficient decoding unit 2305 checks whether location information associated with the filter coefficient data is stored in the multimedia transfer data.

Here, in a case where the data regarding the filter coefficients is not stored in the same multimedia transfer data (No in step S2705), the filter coefficient decoding unit 2305 acquires location information such as a URL extracted from the filter coefficient bitstream (step S2706).

Then, after acquiring a file of filter coefficient data from a cloud or a recording medium designated by the location information such as a URL, or acquiring filter coefficient data from the filter coefficient bitstream (step S2707), the filter coefficient decoding unit 2305 passes the acquired file or data to the controller 2308 together with the activation time and the attribute information (step S2708).

The controller 2308 temporarily stores the filter coefficients and the attribute information thus received in the filter coefficient memory 2309 (step S2709).

Thereafter, when the activation time comes (step S2710), the controller 2308 reads the corresponding filter coefficients and the attribute information associated with the filter coefficients from the filter coefficient memory 2309 (step S2711), and supplies the filter coefficients and the attribute information thus read to the image quality improving unit 2306.

The image quality improving unit 2306 saves the filter coefficients in the corresponding layer of the corresponding media type or in the designated region in the layer in reference to the attribute information to update a learning model in the image quality improving unit 2306 (step S2712).

Thereafter, the image quality improving unit 2306 performs an image quality improving process for a picture signal output from the picture decoding unit 2302, with use of the updated learning model (step S2713). For example, the image quality improving unit 2306 performs an image quality improving process such as a super-resolution process for forming a high-resolution picture signal from a low-resolution or standard-resolution picture signal and high dynamic range rendering.

### Example 3

Also in a third example, filter coefficients of a learning model to be updated and attribute information associated with the filter coefficients are multiplexed and transferred from a content providing side together with bitstreams of respective media data of a picture, audio, and auxiliary data, as in the first example. However, unique identification information (ID) is given to each set of filter coefficients in such a manner as to transfer multiple types of filter coefficients and use the multiple types of filter coefficients for different purposes. Moreover, in a case where a set of filter coefficients are divided and transferred several times, the same ID is given to all of the divided sub-sets.

The content providing side transfers the multiple types of filter coefficients beforehand. Moreover, the content providing side designates an ID of one type of filter coefficients selected from the multiple types of filter coefficients transferred beforehand and time information indicating a time at which this type of filter coefficient is activated, as a command for selecting the filter coefficient and executing the selected filter coefficient, and transfers the ID and the time information.

The time information is also called a time code or a time stamp, and is the same type of time code as a time code for controlling a medium (e.g., picture stream) to which the filter coefficients are applied. The content providing side transfers beforehand the multiple types of filter coefficients before the activation time at which the respective filter coefficients are activated on a content receiving side. Accordingly, such control is achievable that application of the filter coefficients starts at a time different from the time of transfer, by transferring the filter coefficients beforehand and issuing the command.

For example, the content providing side transfers beforehand, as filter coefficients for super-resolution processing, two types of filter coefficients including filter coefficients A for an image containing a large volume of noise and filter coefficients B for an image containing a small volume of noise. Thereafter, the content receiving side achieves such control that the suitable one of the filter coefficients A or the filter coefficients B are applied according to the volume of noise contained in each of frames of a moving image during supply of content (during broadcasting or distribution).

Moreover, according to the third example, the content receiving side such as a TV receiving device includes a filter coefficient memory for storing filter coefficients for each ID and a controller for controlling input and output to and from the filter coefficient memory. In addition, in a case where information associated with the filter coefficients to each of which an ID has been given is extracted from a multiplexed bitstream received and demultiplexed, the controller stores each of the filter coefficients in the memory region that is included in the filter coefficient memory and that corresponds to the ID. Thereafter, when a command containing the ID of the filter coefficients and time information indicating a time at which the filter coefficients are activated is issued from the content providing side, the controller extracts the filter coefficients from the memory region that is included in the filter coefficient memory and that corresponds to the ID at the activation time, and starts application of the extracted filter coefficients to a quality improving process (e.g., a super-resolution process for a low-resolution picture signal) for a target medium.

FIG. 28 schematically depicts a configuration example of a content reproduction system 2800 according to the third example. The content reproduction system 2800 is also configured to receive a broadcasting signal, a media reproduction signal, and stream distribution content, and output picture and audio signals. The content reproduction system 2800 is equipped with a tuner, an HDMI (registered trademark) interface, a network interface, and the like. However, these components are not depicted in FIG. 28. For example, the content reproduction system 2800 is a TV receiving device or a set top box.

The content reproduction system 2800 includes a demultiplexing unit 2801, a picture decoding unit 2802, an audio decoding unit 2803, an auxiliary data decoding unit 2804, a filter coefficient decoding unit 2805, an image quality improving unit 2806, a sound quality improving unit 2807, a controller 2808, a filter coefficient memory 2809, an image display unit 2810, and an audio output unit 2811. Each of the picture decoding unit 2802, the audio decoding unit 2803, the auxiliary data decoding unit 2804, the image quality improving unit 2806, the sound quality improving unit 2807, the image display unit 2810, and the audio output unit 2811 has a function similar to the function of the component having the same name in the content reproduction system 100 depicted in FIG. 1. Accordingly, description of these components is omitted here.

The demultiplexing unit 2801 demultiplexes a multiplexed bitstream received from the outside as a broadcasting signal, a reproduction signal, or streaming data into a picture bitstream, an audio bitstream, an auxiliary bitstream, and a filter coefficient bitstream, and distributes the demultiplexed streams to the picture decoding unit 2802, the audio decoding unit 2803, the auxiliary data decoding unit 2804, and the filter coefficient decoding unit 2805 disposed in the following stage. However, the filter coefficient bitstream is not necessarily multiplexed on the received multiplexed bitstream. In this case, no filter coefficient bitstream is supplied to the filter coefficient decoding unit 2805. Moreover, in a case where a control command for designating an ID and an activation time is demultiplexed from the multiplexed bitstream, the demultiplexing unit 2801 is assumed to distribute the control command to the controller 2809 via the filter coefficient decoding unit 2805.

After extracting attribute information associated with filter coefficients and a data main portion of the filter coefficients by performing a decoding process for a filter coefficient bitstream coded by a predetermined coding system, the filter coefficient decoding unit 2805 supplies the extracted information and data to the controller 2808. The attribute information contains information associated with the ID given to the transmitted filter coefficients, a data type (e.g., for a moving image, a still image, and graphics) of the transmitted filter coefficients, a data size (e.g., distinction between the whole or a part of a certain layer) of the transmitted filter coefficients, position information associated with the filter coefficients (which layer and what range the data overwrites), and accuracy (e.g., 32-bit floating-point number type, 16-bit integer type, and 8-bit integer type).

The controller 2808 controls input to and output from the filter coefficient memory 2809. Specifically, after receiving filter coefficients and ID information and attribute information that are associated with the filter coefficients from the filter coefficient decoding unit 2805, the controller 2808 stores the filter coefficients and the attribute information associated with the filter coefficients in the memory region that corresponds to the ID information and that is included in the filter coefficient memory 2809.

In addition, in a case of reception of a control command designating the ID of the filter coefficients and the activation time, the controller 2808 reads the filter coefficients and the attribute information associated with the filter coefficients from the memory region that is included in the filter coefficient memory 2809 and that corresponds to the ID, and supplies the filter coefficients and the attribute information to the image quality improving unit 2806 when the activation time has come. The activation time is a time at which start of application of the filter coefficients to the target medium is designated (a picture stream is an application target in the example depicted in FIG. 28).

The image quality improving unit 2806 saves the filter coefficients in the corresponding layer of the corresponding media type or in the designated region in the layer in reference to the attribute information to update a learning model in the image quality improving unit 2806. Thereafter, the image quality improving unit 2806 performs an image quality improving process such as a super-resolution process and high dynamic range rendering for a picture signal output from the picture decoding unit 2802, with use of the updated learning model.

Accordingly, the content reproduction system 2800 is capable of storing the filter coefficients transferred beforehand in the memory region that is included in the filter coefficient memory 2809 and that corresponds to the ID, and then starting an image quality improving process to which the filter coefficients designated by the ID have been applied from the activation time when the control command designating the ID and the activation time is received.

Note that FIG. 28 is such an illustration where the filter coefficients and the attribute information stored in the respective memory regions included in the filter coefficient memory 2809 are output to only the image quality improving unit 2806 by the controller 2808. However, in a case where audio is designated as a media type in the attribute information, it should be understood that the controller 2808 supplies attribute information (type information, position information, or the like) and filter coefficients designated by an ID to the sound quality improving unit 2807, and performs a learning model update process for sound quality improvement in a manner similar to the foregoing manner.

FIG. 29 schematically depicts a multimedia transfer data format for multiplexing and transferring filter coefficients of a learning model and attribute information associated with the filter coefficients, and further a control command together with respective media data such as a picture, audio, and auxiliary data. The filter coefficients of the learning model multiplexed in this transfer data format are data for updating filter coefficients of a learning model associated with quality improvement of any one piece of media data contained in the same transfer data.

The multimedia transfer data format includes data regarding the respective media each given a media header. The respective items of data are sequentially connected with a sequence header indicated by a reference number 2901 and disposed at the head. According to the example depicted in FIG. 29, a main portion of picture data indicated by a reference number 2903 is transferred subsequently to a media header of the picture indicated by a reference number 2902. ID information (ID: 0 here) associated with filter coefficients is given to a subsequent media header indicated by a reference number 2904 and associated with the filter coefficients. Immediately after the ID information, data 0 indicated by a reference number 2905 and associated with the filter coefficients (ID: 0) is transferred. ID information (ID: 1 here) associated with filter coefficients is given to a subsequent media header indicated by a reference number 2906 and associated with the filter coefficients. Immediately after the ID information, data 1 indicated by a reference number 2907 and associated with the filter coefficients (ID: 1) is transferred. Furthermore, a control command indicated by a reference number 2908 is subsequently transferred. The control command contains an ID of the filter coefficients whose application is to be started and an activation time as a designated start time of application of the filter coefficients.

When the content reproduction system 2800 receives multimedia transfer data including the data format depicted in FIG. 29, the demultiplexing unit 2801 is allowed to identify media types of a media data main portion that is to be received immediately after a media header, in reference to this media header, and sequentially allocate the respective media data main portion to the picture decoding unit 2802, the audio decoding unit 2803, the auxiliary data decoding unit 2804, and the filter coefficient decoding unit 2805. Moreover, in a case where a control command for designating an ID and an activation time is demultiplexed from the multiplexed bitstream, the demultiplexing unit 2801 is assumed to distribute the control command to the controller 2809 via the filter coefficient decoding unit 2805.

After extracting ID: 0 of the filter coefficients, attribute information associated with filter coefficients, and the data 0 regarding the filter coefficients by performing a decoding process for the filter coefficient bitstream coded by a predetermined coding system, the filter coefficient decoding unit 2805 supplies the extracted information and data to the controller 2808. Thereafter, the controller 2808 stores the data 0 regarding the filter coefficients and the attribute information associated with the filter coefficients received from the filter coefficient decoding unit 2805 in the memory region that is included in the filter coefficient memory 2809 and that corresponds to ID: 0.

Subsequently, in a case where the filter coefficient decoding unit 2805 extracts the filter coefficient ID: 1, the attribute information associated with the filter coefficients, and the data 1 regarding the filter coefficients extracted from the coded filter coefficient bitstream, the filter coefficient decoding unit 2805 similarly supplies the information and the data to the controller 2808. Thereafter, the controller 2808 stores the data 1 regarding the filter coefficients and the attribute information associated with the filter coefficients received from the filter coefficient decoding unit 2805 in the memory region that is included in the filter coefficient memory 2809 and that corresponds to ID: 1.

Thereafter, a control command is transferred. When the activation time designated by the control command comes, the controller 2808 reads the data regarding the filter coefficients and the attribute information from the memory region that is included in the filter coefficient memory 2809 and that corresponds to the ID designated by the control command, and supplies the data and the attribute information to the image quality improving unit 2806.

FIG. 30 presents a data format example of the data 0 regarding the filter coefficients multiplexed on the multimedia transfer data depicted in FIG. 29.

Filter coefficient data depicted in FIG. 30 contains, as attribute information, a data type (moving image) indicated by a reference number 3001, ID information (ID: 0) indicated by a reference number 3002, a data size (the number of sets of filter coefficient data: 1) indicated by a reference number 3003, position information (a full set of the filters in the first layer) indicated by a reference number 3004, and accuracy of data (8-bit integer type) indicated by a reference number 3005. In addition, data regarding filter coefficients indicated by a reference number 3006 is stored subsequently to the respective items of the attribute information 3001 to 3005. For example, in a case of 32 sets of filters in 9 × 9 matrix in the first layer, a data portion has a size of 8 × 9 × 9 × 32 = 20,736 bits.

FIG. 31 depicts a data format example of the data 1 regarding the filter coefficients multiplexed on the multimedia transfer data depicted in FIG. 29.

Filter coefficient data depicted in FIG. 31 contains, as attribute information, a data type (moving image) indicated by a reference number 3101, ID information (ID: 1) indicated by a reference number 3102, a data size (the number of sets of filter coefficient data: 1) indicated by a reference number 3103, position information (a full set of the filters in the first layer) indicated by a reference number 3104, and accuracy of data (16-bit integer type) indicated by a reference number 3105. In addition, data regarding filter coefficients indicated by a reference number 3106 is stored subsequently to the respective items of the attribute information 3101 to 3105. For example, in a case of 32 sets of filters in 9 × 9 matrix in the first layer, a data portion has a size of 16 × 9 × 9 × 32 = 41,472 bits.

FIG. 32 depicts a data format example of a control command multiplexed on the multimedia transfer data depicted in FIG. 29.

The control command depicted in FIG. 32 contains type information indicated by a reference number 3201 and associated with the control command, ID information indicated by a reference number 3202, and a time code indicated by a reference number 3203. The type information 3201 indicates a type ("moving image" in the depicted example) of a target medium of the control command. Further, the ID information 3202 indicates an ID (ID: 1 in the depicted example) of the filter coefficients designated by the control command. Furthermore, the time code 3203 indicates an activation time (a second frame of the moving image in the depicted image) at which application of the filter coefficients designated by the ID information 3202 is to be started.

After sequentially receiving the data 0 and data 1 regarding the filter coefficients depicted in FIGS. 30 and 31 from the filter coefficient decoding unit 2805, the controller 2808 sequentially stores the data 0 and data 1 in the memory regions that are included in the filter coefficient memory 2809 and that correspond to the respective IDs. Thereafter, application of the filter coefficients transferred beforehand is instructed by transfer of the control command depicted in FIG. 32. When the activation time designated by the control command comes, the controller 2808 reads the filter coefficients and the attribute information associated with the filter coefficients from the memory region that is included in the filter coefficient memory 2809 and that corresponds to the ID designated by the control command, and passes the filter coefficients and the attribute information to the image quality improving unit 2806. The image quality improving unit 2806 overwrites the filter coefficients of all the filters of the first layer received from the controller 2808, to update a learning model in the image quality improving unit 2806, and applies the updated learning model to the second frame corresponding to the activation time and the following frames.

FIG. 33 schematically depicts another configuration example of a content reproduction system 3300 according to the third example. The content reproduction system 3300 is also configured to receive a broadcasting signal, a media reproduction signal, and stream distribution content, and output picture and audio signals. The content reproduction system 3300 is equipped with a tuner, an HDMI (registered trademark) interface, a network interface, and the like. However, these components are not depicted in FIG. 33. For example, the content reproduction system 3300 is a TV receiving device or a set top box.

The content reproduction system 3300 includes a demultiplexing and data retrieval unit 3301, a picture decoding unit 3302, an audio decoding unit 3303, an auxiliary data decoding unit 3304, a filter coefficient decoding unit 3305, an image quality improving unit 3306, a sound quality improving unit 3307, a controller 3308, a filter coefficient memory 3309, an image display unit 3310, and an audio output unit 3311. Each of the picture decoding unit 3302, the audio decoding unit 3303, the auxiliary data decoding unit 3304, the image quality improving unit 3306, the sound quality improving unit 3307, the image display unit 3310, and the audio output unit 3311 has a function similar to the function of the component having the same name in the content reproduction system 300 depicted in FIG. 3. Accordingly, description of these components is omitted here.

The demultiplexing and data retrieval unit 3301 demultiplexes a multiplexed bitstream received from the outside into a picture bitstream, an audio bitstream, an auxiliary bitstream, and a filter coefficient bitstream, and distributes the demultiplexed streams to the picture decoding unit 3302, the audio decoding unit 3303, the auxiliary data decoding unit 3304, and the filter coefficient decoding unit 3305 disposed in the following stage. However, a filter coefficient bitstream is not necessarily multiplexed on the received multiplexed bitstream. In this case, no filter coefficient bitstream is supplied to the filter coefficient decoding unit 3305. Moreover, in a case where a control command for designating an ID and an activation time is demultiplexed from the multiplexed bitstream, the demultiplexing unit 3301 is assumed to distribute the control command to the controller 3309 via the filter coefficient decoding unit 3305.

In addition, the demultiplexing and data retrieval unit 3301 performs a process for acquiring data in a cloud or a recording medium via a network interface (not depicted). Generally, data is handled in units of a file. Moreover, a location of a file in the cloud or the recording medium is described in the form of a URI or a URL.

The filter coefficient decoding unit 3305 performs a decoding process for a filter coefficient bitstream coded by a predetermined coding system, to extract attribute information associated with filter coefficients and a data main portion of the filter coefficients. The data main portion of the filter coefficients is not filter coefficient data itself, and stores information indicating a location of a data file describing filter coefficients in the cloud or the recording medium. Accordingly, after acquiring location information described in the URL format, for example, by decoding the filter coefficient bit stream, the filter coefficient decoding unit 3305 acquires a file of the filter coefficient data from the cloud or the recording medium via the demultiplexing and data retrieval unit 3301. Thereafter, the filter coefficient decoding unit 3305 supplies the attribute information associated with the filter coefficients and the data regarding the filter coefficients to the controller 3308. The attribute information contains information associated with a data type (e.g., for a moving image, a still image, and graphics) of the transmitted filter coefficients, a data size (e.g., distinction between the whole and a part of a certain layer) of the transmitted filter coefficients, position information associated with the filter coefficients (which layer and what range the data overwrites), and accuracy (e.g., 32-bit floating-point number type, 16-bit integer type, and 8-bit integer type).

The controller 3308 controls input to and output from the filter coefficient memory 3309. Specifically, when the controller 3308 receives filter coefficients and ID information and attribute information that are associated with the filter coefficients from the filter coefficient decoding unit 3305, the controller 3308 stores the filter coefficients and the attribute information associated with the filter coefficients in the memory region that is included in the filter coefficient memory 3309 and that corresponds to the ID information.

In addition, in a case of reception of a control command designating the ID of the filter coefficients and the activation time, the controller 3308 reads the filter coefficients and the attribute information associated with the filter coefficients from the memory region that is included in the filter coefficient memory 3309 and that corresponds to the ID, and supplies the filter coefficients and the attribute information to the image quality improving unit 3306 when the activation time has come. The activation time is a time at which start of application of the filter coefficient to the target medium is designated (a picture stream is an application target in the example depicted in FIG. 33).

The image quality improving unit 3306 saves the filter coefficients in the corresponding layer of the corresponding media type or in the designated region in the layer in reference to the attribute information to update a learning model in the image quality improving unit 3306. Thereafter, the image quality improving unit 3306 performs an image quality improving process such as a super-resolution process and high dynamic range rendering for a picture signal output from the picture decoding unit 3302, with use of the updated learning model.

Accordingly, the content reproduction system 3300 is capable of storing filter coefficients transferred beforehand in the memory region that is included in the filter coefficient memory 3309 and that corresponds to an ID, and then starting an image quality improving process to which the filter coefficients designated by the ID have been applied from an activation time when a control command designating the ID and the activation time is subsequently received.

Note that FIG. 33 is such an illustration where the filter coefficients and the attribute information temporarily stored in the respective memory regions included in the filter coefficient memory 3309 are output to only the image quality improving unit 3306 by the controller 3308. However, in a case where audio is designated as a media type in the attribute information, it should be understood that the controller 3308 supplies the attribute information (type information, position information, or the like) and the filter coefficients to the sound quality improving unit 3307, and performs a learning model update process for sound quality improvement in a manner similar to the foregoing manner.

FIG. 34 schematically depicts a multimedia transfer data format for multiplexing and transferring filter coefficients of a learning model, attribute information associated with the filter coefficients, and further a control command together with respective media data such as a picture, audio, and auxiliary data. The filter coefficients of the learning model multiplexed in this transfer data format are data for updating filter coefficients of a learning model associated with quality improvement of any one piece of media data contained in the same transfer data.

The multimedia transfer data format includes data regarding the respective media each given a media header. The respective items of data are sequentially connected with a sequence header indicated by a reference number 3401 and disposed at the head. According to the example depicted in FIG. 34, a main portion of picture data indicated by a reference number 3403 is transferred subsequently to a media header of the picture indicated by a reference number 3402. ID (ID: 0 here) information associated with filter coefficients is given to a subsequent media header indicated by a reference number 3404 and associated with the filter coefficients. Immediately after the ID information, attribute information associated with filter coefficient data identified as ID: 0 and information describing a location of a data file of the filter coefficient data in a cloud or a recording medium in an URL format, for example, are transferred as the data main portion associated with the filter coefficients and indicated by a reference number 3505. Moreover, ID information (ID: 1 here) associated with filter coefficients is subsequently given to a media header indicated by a reference number 3506 and associated with the filter coefficients. Immediately after the ID information, attribute information associated with filter coefficient data and identified by ID: 1 and information describing a location of a data file of the filter coefficient data in the cloud or the recording medium in the URL format, for example, are transferred as the data main portion associated with the filter coefficients and indicated by a reference number 3507. Furthermore, a control command indicated by a reference number 3508 is subsequently transferred. The control command contains an ID of the filter coefficients whose application is to be started and an activation time as a designated start time of application of the filter coefficients.

When the content reproduction system 3300 receives multimedia transfer data including the data format depicted in FIG. 34, the demultiplexing and data retrieval unit 3301 is allowed to identify media types of a media data main portion that is to be received immediately after a media header, in reference to this media header, and sequentially allocate the respective media data main portion to the picture decoding unit 3302, the audio decoding unit 3303, the auxiliary data decoding unit 3304, and the filter coefficient decoding unit 3305. Moreover, in a case where a control command for designating the ID and the activation time is demultiplexed from the multiplexed bitstream, the demultiplexing and data retrieval unit 3301 is assumed to distribute the control command to the controller 3309 via the filter coefficient decoding unit 3305.

After extracting ID: 0 of the filter coefficients, the attribute information associated with the filter coefficients, and the location information associated with the filter coefficient data identified as ID: 0 by performing a decoding process for the filter coefficient bitstream coded by a predetermined coding system, the filter coefficient decoding unit 3305 acquires the filter coefficient data identified as ID: 0 from the cloud or the recording medium via the demultiplexing and data retrieval unit 3301. Thereafter, the filter coefficient decoding unit 3305 supplies the attribute information associated with the filter coefficients identified as ID: 0 and the filter coefficient data to the controller 3308. The controller 3308 stores the filter coefficient data and the attribute information associated with the filter coefficient data received from the filter coefficient decoding unit 3305 in the memory region that is included in the filter coefficient memory 3309 and that corresponds to ID: 0.

Subsequently, in a case where the filter coefficient ID: 1, the attribute information associated with the filter coefficients, and the location information associated with the filter coefficient data identified as ID: 1 are extracted from the coded filter coefficient bitstream, the filter coefficient decoding unit 3305 similarly acquires filter coefficient data identified as ID: 1 from the cloud or the recording medium via the demultiplexing and data retrieval unit 3301. Thereafter, the filter coefficient decoding unit 3305 supplies the attribute information associated with the filter coefficients identified as ID: 1 and the filter coefficient data to the controller 3308. The controller 3308 stores the filter coefficient data and the attribute information associated with the filter coefficient data received from the filter coefficient decoding unit 3305 in the memory region that is included in the filter coefficient memory 3309 and that corresponds to ID: 1.

Thereafter, a control command is transferred. When the activation time designated by the control command comes, the controller 3308 reads the data regarding the filter coefficients and the attribute information associated with the data from the memory region that is included in the filter coefficient memory 3309 and that corresponds to the ID designated by the control command, and supplies the data and the attribute information to the image quality improving unit 3306.

FIG. 35 presents a data format example of the filter coefficient data (ID: 0) multiplexed on the multimedia transfer data depicted in FIG. 34.

Filter coefficient data depicted in FIG. 35 contains, as attribute information, a data type (moving image) indicated by a reference number 3501, ID information (ID: 0) indicated by a reference number 3502, a data size (the number of sets of filter coefficient data: 1) indicated by a reference number 3503, position information (a full set of the filters in the first layer) indicated by a reference number 3504, and accuracy of data (8-bit integer type) indicated by a reference number 3505. In addition, location information in the cloud or the recording medium indicated by a reference number 3506 and associated with the filter coefficient data identified as ID: 0 is stored subsequently to the respective items of the attribute information 3501 to 3505. The location information is described in the form of a URL, for example.

FIG. 36 presents a data format example of data (ID: 1) regarding filter coefficients multiplexed on the multimedia transfer data depicted in FIG. 34.

Filter coefficient data depicted in FIG. 36 contains, as attribute information, a data type (moving image) indicated by a reference number 3601, ID information (ID: 1) indicated by a reference number 3602, a data size (the number of sets of filter coefficient data: 1) indicated by a reference number 3603, position information (a full set of the filters in the first layer) indicated by a reference number 3604, and accuracy of data (16-bit integer type) indicated by a reference number 3605. In addition, location information in the cloud or the recording medium indicated by a reference number 3606 and associated with the filter coefficient data identified by ID: 1 is stored subsequently to the respective items of the attribute information 3601 to 3605. The location information is described in the form of a URL, for example.

FIG. 37 depicts a data format example of a control command multiplexed on the multimedia transfer data depicted in FIG. 34.

The control command depicted in FIG. 37 contains type information indicated by a reference number 3701 and associated with the control command, ID information indicated by a reference number 3702, and a time code indicated by a reference number 3703. The type information 3701 indicates a type ("moving image" in the depicted example) of a target medium of the control command. Further, the ID information 3702 indicates an ID (ID: 1 in the depicted example) of filter coefficients designated by the control command. Furthermore, the time code 3703 indicates an activation time (a second frame of the moving image in the depicted image) at which application of the filter coefficients designated by the ID information 3702 is started.

After sequentially receiving the filter coefficient data identified as ID: 0 and ID: 1 from the filter coefficient decoding unit 3305, the controller 3308 sequentially stores the respective data in the memory regions that are included in the filter coefficient memory 2809 and that correspond to the respective IDs. Thereafter, application of the filter coefficients transferred beforehand is instructed by transfer of the control command depicted in FIG. 37. When the activation time designated by the control command comes, the controller 3308 reads the filter coefficients and the attribute information associated with the filter coefficients from the memory regions that are included in the filter coefficient memory 3309 and that correspond to the IDs designated by the control command, and passes the filter coefficients and the attribute information to the image quality improving unit 3306. The image quality improving unit 3306 overwrites the filter coefficients of all the filters of the first layer received from the controller 3308, to update a learning model in the image quality improving unit 3306, and applies the updated learning model to the second frame of the picture frame corresponding to the activation time and the following frames.

FIG. 38 presents a processing procedure in the form of a flowchart, executed by the content reproduction system 3300 according to the third example at the time of reception of a multiplexed bitstream.

When the content reproduction system 3300 receives a multiplexed bitstream (step S3801), the demultiplexing and data retrieval unit 3301 first demultiplexes the multiplexed bitstream into bitstreams of respective media in reference to information described in a media header given to the head of the media data (step S3802), and distributes the respective bitstreams to the picture decoding unit 3302, the audio decoding unit 3303, the auxiliary data decoding unit 3304, and the filter coefficient decoding unit 3305 disposed in the following stage.

Here, in a case where the demultiplexed bitstream is a bitstream other than filter coefficients, i.e., a bitstream of any one of a picture, audio, or auxiliary data (No in step S3303 and step S3814), the bitstream is allocated to the corresponding decoding unit of the picture decoding unit 3302, the audio decoding unit 3303, and the auxiliary data decoding unit 3304. Decoding processes performed for the picture decoding unit 3302, the audio decoding unit 3303, and the auxiliary data decoding unit 3304 are known in the corresponding fields, and are not directly related to the technology proposed in the present description. Accordingly, detailed description of these processes is omitted.

In a case where the demultiplexed bitstream is a bitstream of filter coefficients (Yes in step S3803), the filter coefficient decoding unit 2305 analyzes a media header (step S3804), and further acquires ID information and attribute information (type, size, position, accuracy, and the like) associated with the filter coefficients.

Subsequently, the filter coefficient decoding unit 3305 checks whether data regarding the filter coefficients designated by the attribute information (corresponding to an update target of current multimedia transfer data) is stored in the same multimedia transfer data, in reference to information in the media header or the like (step S3805). Alternatively, the filter coefficient decoding unit 3305 checks whether location information associated with the filter coefficient data is stored in the multimedia transfer data.

Here, in a case where the data regarding the filter coefficients is not stored in the same multimedia transfer data (No in step S3805), the filter coefficient decoding unit 3305 acquires location information such as a URL extracted from the filter coefficient bitstream (step S3806).

Then, after acquiring a file of filter coefficient data from a cloud or a recording medium designated by the location information such as a URL or acquiring filter coefficient data from the filter coefficient bitstream (step S3807), the filter coefficient decoding unit 3305 passes the acquired file or data to the controller 3308 together with the attribute information (step S3808).

The controller 3308 stores the filter coefficients and the attribute information thus received in the memory region that is included in the filter coefficient memory 3309 and that corresponds to the ID (step S3809).

On the other hand, in a case where the demultiplexed bitstream is not a bitstream of the filter coefficients (No in step S3803) but a control command (Yes in step S3814), the controller 3308 analyzes the control command received via the filter coefficient decoding unit 3305 (step S3815), and acquires ID information indicating the filter coefficient instructed to be applied to a medium and an activation time at which application of the filter coefficients to the medium is started.

Thereafter, when the activation time comes (step S3810), the controller 3308 reads the filter coefficients and the attribute information associated with the filter coefficients from the corresponding memory region in the filter coefficient memory 3309 (step S3811), and supplies the filter coefficients and the attribute information thus read to the image quality improving unit 3306.

The image quality improving unit 3306 saves the filter coefficients in the corresponding layer of the corresponding media type or in the designated region in the layer in reference to the attribute information to update a learning model in the image quality improving unit 3306 (step S3812).

Thereafter, the image quality improving unit 3306 performs an image quality improving process for a picture signal output from the picture decoding unit 3302, with use of the update learning model (step S3813). For example, the image quality improving unit 3306 performs an image quality improving process such as a super-resolution process for forming a high-resolution picture signal from a low-resolution or standard-resolution picture signal and high dynamic range rendering.

### Example 4

According to a fourth example, the content receiving side has functions of storing one or multiple types of filter coefficient data provided from the outside in a memory, and outputting the stored data to the outside as necessary.

In a case of simultaneous handling of multiple types of filter coefficients, management and handling of the filter coefficient data can be facilitated by giving a unique ID to each set of the filter coefficients and storing the filter coefficient data with use of memory regions provided for each ID, as in the third example.

Moreover, it is assumed that a condition "as necessary" includes a case where a request for external output is received from the outside and a case where an instruction of external output is directly issued from a user via a UI (User Interface).

Further, when the filter coefficient data read from the memory is output to the outside, the data may be either output without change or output as a filter coefficient bitstream coded in a similar manner as that at the time of reception.

In addition, an output destination of the filter coefficient data may be a server in a cloud, an external or built-in disk, or a cartridge type memory device such as a USB (Universal Serial Bus) memory. In a case where the output destination is a cloud or a recording medium, an output place of this destination can be designated in the form of a URI or a URL. For example, a request source of external output may designate an output place in the form of a URI or a URL.

FIG. 39 schematically depicts a configuration example of a content reproduction system 3900 according to the fourth example. The content reproduction system 3900 is also configured to receive a broadcasting signal, a media reproduction signal, and stream distribution content, and output picture and audio signals. The content reproduction system 3900 is equipped with a tuner, an HDMI (registered trademark) interface, a network interface, and the like. However, these components are not depicted in FIG. 39. For example, the content reproduction system 3900 is a TV receiving device or a set top box.

The content reproduction system 3900 includes a demultiplexing data retrieval and data upload unit 3901, a picture decoding unit 3902, an audio decoding unit 3903, an auxiliary data decoding unit 3904, a filter coefficient decoding unit 3905, an image quality improving unit 3906, a sound quality improving unit 3907, a controller 3908, a filter coefficient memory 3909, a filter coefficient coding unit 3910, an image display unit 3911, and an audio output unit 3912. Each of the picture decoding unit 3902, the audio decoding unit 3903, the auxiliary data decoding unit 3904, the image quality improving unit 3906, the sound quality improving unit 3907, the image display unit 3911, and the audio output unit 3912 has a function similar to the function of the component having the same name in the content reproduction system 100 depicted in FIG. 1. Accordingly, description of these components is omitted here.

The demultiplexing data retrieval and data upload unit 3901 performs respective processes for demultiplexing a transfer stream and acquiring filter coefficient data in a manner similar to that of the demultiplexing and data retrieval unit 3301 included in the content reproduction system 3300 according to the second example. The demultiplexing data retrieval and data upload unit 3901 is also capable of performing a process for uploading data to an output destination designated in the form of a URI, a URL, or the like, or recording data in a USB memory.

The filter coefficient decoding unit 3905 has a function similar to the function of the filter coefficient decoding unit 3305 included in the content reproduction system 3300 according to the second example.

The controller 3908 controls input to and output from the filter coefficient memory 3909. Specifically, the controller 3908 designates an ID, and then stores data in a corresponding memory region in the filter coefficient memory 3909 and reads data from the corresponding memory region. Processes for storing filter coefficient data and attribute information received from the outside in the filter coefficient memory 3909 and providing filter coefficient data and attribute information for the image quality improving unit 3906 at the time of an activation time are similar to the corresponding processes in the second example, and therefore are not described in detail here.

According to the present example, an external output request for outputting filter coefficient data containing ID information and information indicating an output destination to the outside is input to the content reproduction system 3900. Such an external output request may be either a request in the form of a control command multiplexed on multimedia transfer data or a request in other forms. Alternatively, an instruction for external output is directly issued from the user via a UI in some cases.

After reading filter coefficient data and attribute information from a memory region corresponding to an ID designated by the external output request, the controller 3908 outputs the read data and information to the filter coefficient coding unit 3910. The filter coefficient coding unit 3910 codes the ID, the filter coefficient data, and the attribute information to generate a filter coefficient bitstream. Thereafter, the demultiplexing data retrieval and data upload unit 3901 uploads the coded filter coefficient bitstream to an output destination designated in the form of a URI, a URL, or the like, or records the coded filter coefficient bitstream in a recording medium such as a USB memory.

### [Industrial Applicability]

The technology disclosed in the present description has been described above in detail with reference to specific embodiments. However, it is obvious that corrections or substitutions for the embodiments may be made by those skilled in the art without departing from the subject matters of the technology disclosed in the present description.

While the embodiments where the technology disclosed in the present description is applied to a TV receiver have mainly been described, the subject matters of the technology disclosed in the present description are not limited to them. The technology disclosed in the present description is applicable in a similar manner to various types of display devices presenting picture content to a user. For example, the technology disclosed in the present description is applicable in a similar manner to a set top box receiving a picture stream, a multifunction information terminal or a personal computer such as a smartphone and a tablet for viewing and listening to a picture stream, a media player for displaying picture content reproduced from a recording medium such as a Blu-ray disc, and others.

In short, the technology disclosed in the present description has been described only in the form of example, and it should therefore not be interpreted that the technology disclosed in the present description is limited to the contents described in the present description. The claims should be taken into consideration for determining the subject matters of the technology disclosed in the present description.

Note that the technology disclosed in the present description may also have the following configurations.

(1) A reception device including:
   a reception unit that receives a stream generated by multiplexing content and attribute information associated with a weighting factor of a learning model learned to process the content; and
   an acquisition unit that acquires the attribute information by demultiplexing the received stream.
(2) The reception device according to (1) described above, in which the learning model includes a learning model for improving quality of the content.
(3) The reception device according to (1) or (2) described above, in which
   the content includes a picture, and
   the learning model includes a learning model for improving image quality of the picture.
(4) The reception device according to (3) described above, in which the learning model includes a learning model for performing a super-resolution process or high dynamic range rendering for the picture.
(5) The reception device according to any one of (1) to (4) described above, in which
   the content includes an audio signal, and
   the learning model includes a learning model for expanding a bandwidth and improving sound quality of the audio signal.
(6) The reception device according to (5) described above, in which the learning model includes a learning model for expanding a bandwidth of audio.
(7) The reception device according to any one of (1) to (6) described above, in which the attribute information includes information associated with at least one of a type of the content to which the weighting factor is to be applied, a data size of the weighting factor to be updated, position information indicating a position of the weighting factor to be updated in the learning model, and accuracy of data regarding the weighting factor.
(8) The reception device according to any one of (1) to (7) described above, in which
   the reception unit receives the stream on which the weighting factor is further multiplexed, and
   the acquisition unit further acquires the weighting factor when the stream is demultiplexed.
(9) The reception device according to any one of (1) to (7) described above, in which
   the reception unit receives the stream on which location information indicating a location of the weighting factor is further multiplexed, and
   the acquisition unit further acquires the weighting factor in reference to the location information acquired by demultiplexing the stream.
(10) The reception device according to (8) or (9) described above, further including:
   a processing unit that updates the learning model in reference to the acquired weighting factor and the acquired attribute information, and processes the content.
(11) The reception device according to any one of (1) to (7) described above, further including:
   a processing unit that processes the content in reference to the learning model;
   a memory that stores a weighting factor; and
   a controller that controls input and output of the weighting factor to and from the memory, in which
   the reception unit receives the stream on which information associated with a time at which application of the weighting factor is started is further multiplexed, and
   the controller supplies the weighting factor read from the memory to the processing unit, in reference to the time acquired by demultiplexing the stream.
(12) The reception device according to any one of (1) to (7) described above, further including:
   a memory that includes a memory region for storing the weighting factor for each identification information; and
   a controller that controls input and output of the weighting factor to and from the corresponding memory region in the memory in reference to the identification information, in which
   the controller supplies the weighting factor read from the corresponding memory region of the memory to the processing unit, on the basis of the identification information indicating the weighting factor whose application is to be started and a command indicating a time at which application of the weighting factor is to be started.
(13) The reception device according to (12) described above, in which the reception unit receives the stream on which the identification information indicating the weighting factor whose application is to be started and the command indicating the time at which application of the weighting factor is to be started are further multiplexed.
(14) The reception device according to any one of (1) to (13) described above, further including:
   a memory that stores the weighting factor; and
   a controller that controls input and output of the weighting factor to and from the memory, in which
   the controller further controls output of the weighting factor read from the memory to an outside.
(15) A reception method including:
   a reception step of receiving a stream generated by multiplexing content and attribute information associated with a weighting factor of a learning model learned to process the content; and
   an acquisition step of acquiring the attribute information by demultiplexing the received stream.
(16) A transmission device including:
   a multiplexing unit that generates a stream by multiplexing content and attribute information associated with a weighting factor of a learning model learned to process the content; and
   a transfer unit that transfers the multiplexed stream to a predetermined transfer medium.
(17) The transmission device according to (16) described above, further including:
   a learning unit that learns the weighting factor.
(18) The transmission device according to (17) described above, in which
   the content includes a picture, and
   the learning unit learns a weighting factor for improving image quality of the picture.
(19) The transmission device according to any one of (16) to (18) described above, in which the attribute information includes information associated with at least one of a type of the content to which the weighting factor is to be applied, a data size of the weighting factor to be updated, position information indicating a position of the weighting factor to be updated in the learning model, and accuracy of data regarding the weighting factor.
(20) A transmission method including:
   a multiplexing step of generating a stream by multiplexing content and attribute information associated with a weighting factor of a learning model learned to process the content; and
   a transfer step of transferring the multiplexed stream to a predetermined transfer medium.

### [Reference Signs List]

- 100:: Content reproduction system
- 101:: Demultiplexing unit
- 102:: Picture decoding unit
- 103:: Audio decoding unit
- 104:: Auxiliary data decoding unit
- 105:: Image quality improving unit
- 106:: Sound quality improving unit
- 107:: Image display unit
- 108:: Audio output unit
- 200:: Display
- 201:: Speaker unit
- 201-1, 201-2:: Exciter
- 202:: Stand
- 300:: Content reproduction system
- 301:: Demultiplexing and data retrieval unit
- 302:: Picture decoding unit
- 303:: Audio decoding unit
- 304:: Auxiliary data decoding unit
- 305:: Image quality improving unit
- 306:: Sound quality improving unit
- 307:: Image display unit
- 308:: Audio output unit
- 500:: Content reproduction system
- 501:: Demultiplexing unit
- 502:: Picture decoding unit
- 503:: Audio decoding unit
- 504:: Auxiliary data decoding unit
- 505:: Filter coefficient decoding unit
- 506:: Image quality improving unit
- 507:: Sound quality improving unit
- 508:: Image display unit
- 509:: Audio output unit
- 1000:: Content reproduction system
- 1001:: Demultiplexing and data retrieval unit
- 1002:: Picture decoding unit
- 1003:: Audio decoding unit
- 1004:: Auxiliary data decoding unit
- 1005:: Filter coefficient decoding unit
- 1006:: Image quality improving unit
- 1007:: Sound quality improving unit
- 1008:: Image display unit
- 1009:: Audio output unit
- 1600:: Content coding system
- 1601:: Down sampler
- 1602:: Picture coding unit
- 1603:: Picture decoding unit
- 1604:: Filter coefficient learner
- 1605:: Multiplexing unit
- 1801:: First layer filter 1801
- 1802:: Second layer filter
- 1803:: Third layer filter
- 1804:: Convolutional neural network
- 1805:: Difference calculator
- 1900:: Content reproduction system
- 1901:: Demultiplexing unit
- 1902:: Picture decoding unit
- 1903:: Audio decoding unit
- 1904:: Auxiliary data decoding unit
- 1905:: Filter coefficient decoding unit
- 1906:: Image quality improving unit
- 1907:: Sound quality improving unit
- 1908:: Controller
- 1909:: Filter coefficient memory
- 1910:: Image display unit
- 1911:: Audio output unit
- 2300:: Content reproduction system
- 2301:: Demultiplexing and data retrieval unit
- 2302:: Picture decoding unit
- 2303:: Audio decoding unit
- 2304:: Auxiliary data decoding unit
- 2305:: Filter coefficient decoding unit
- 2306:: Image quality improving unit
- 2307:: Sound quality improving unit
- 2308:: Controller
- 2309:: Filter coefficient memory
- 2310:: Image display unit
- 2311:: Audio output unit
- 2800:: Content reproduction system
- 2801:: Demultiplexing unit
- 2802:: Picture decoding unit
- 2803:: Audio decoding unit
- 2804:: Auxiliary data decoding unit
- 2805:: Filter coefficient decoding unit
- 2806:: Image quality improving unit
- 2807:: Sound quality improving unit
- 2808:: Controller
- 2809:: Filter coefficient memory
- 2810:: Image display unit
- 2811:: Audio output unit
- 3300:: Content reproduction system
- 3301:: Demultiplexing and data retrieval unit
- 3302:: Picture decoding unit
- 3303:: Audio decoding unit
- 3304:: Auxiliary data decoding unit
- 3305:: Filter coefficient decoding unit
- 3306:: Image quality improving unit
- 3307:: Sound quality improving unit
- 3308:: Controller
- 3309:: Filter coefficient memory
- 3310:: Image display unit
- 3311:: Audio output unit
- 3900:: Content reproduction system
- 3901:: Demultiplexing and data retrieval unit
- 3902:: Picture decoding unit
- 3903:: Audio decoding unit
- 3904:: Auxiliary data decoding unit
- 3905:: Filter coefficient decoding unit
- 3906:: Image quality improving unit
- 3907:: Sound quality improving unit
- 3908:: Controller
- 3909:: Filter coefficient memory
- 3910:: Filter coefficient coding unit
- 3911:: Image display unit
- 3912:: Audio output unit

## Claims

1. A reception device comprising:
a reception unit that receives a stream generated by multiplexing content and attribute information associated with a weighting factor of a learning model learned to process the content; and
an acquisition unit that acquires the attribute information by demultiplexing the received stream.

2. The reception device according to claim 1, wherein the learning model includes a learning model for improving quality of the content.

3. The reception device according to claim 1, wherein
the content includes a picture, and
the learning model includes a learning model for improving image quality of the picture.

4. The reception device according to claim 3, wherein the learning model includes a learning model for performing a super-resolution process or high dynamic range rendering for the picture.

5. The reception device according to claim 1, wherein
the content includes an audio signal, and
the learning model includes a learning model for improving sound quality of the audio signal.

6. The reception device according to claim 5, wherein the learning model includes a learning model for expanding a bandwidth of audio.

7. The reception device according to claim 1, wherein the attribute information includes information associated with at least one of a type of the content to which the weighting factor is to be applied, a data size of the weighting factor to be updated, position information indicating a position of the weighting factor to be updated in the learning model, and accuracy of data regarding the weighting factor.

8. The reception device according to claim 1, wherein
the reception unit receives the stream on which the weighting factor is further multiplexed, and
the acquisition unit further acquires the weighting factor when the stream is demultiplexed.

9. The reception device according to claim 1, wherein
the reception unit receives the stream on which location information indicating a location of the weighting factor is further multiplexed, and
the acquisition unit further acquires the weighting factor in reference to the location information acquired by demultiplexing the stream.

10. The reception device according to claim 8, further comprising:
a processing unit that updates the learning model in reference to the acquired weighting factor and the acquired attribute information, and processes the content.

11. The reception device according to claim 1, further comprising:
a processing unit that processes the content in reference to the learning model;
a memory that stores a weighting factor; and
a controller that controls input and output of the weighting factor to and from the memory, wherein
the reception unit receives the stream on which information associated with a time at which application of the weighting factor is started is further multiplexed, and
the controller supplies the weighting factor read from the memory to the processing unit, in reference to the time acquired by demultiplexing the stream.

12. The reception device according to claim 1, further comprising:
a memory that includes a memory region for storing the weighting factor for each identification information; and
a controller that controls input and output of the weighting factor to and from the corresponding memory region in the memory in reference to the identification information, wherein
the controller supplies the weighting factor read from the corresponding memory region of the memory to the processing unit, in reference to the identification information indicating the weighting factor whose application is to be started and a command indicating a time at which application of the weighting factor is to be started.

13. The reception device according to claim 12, wherein the reception unit receives the stream on which the identification information indicating the weighting factor whose application is to be started and the command indicating the time at which application of the weighting factor is to be started are further multiplexed.

14. The reception device according to claim 1, further comprising:
a memory that stores the weighting factor; and
a controller that controls input and output of the weighting factor to and from the memory, wherein
the controller further controls output of the weighting factor read from the memory to an outside.

15. A reception method comprising:
a reception step of receiving a stream generated by multiplexing content and attribute information associated with a weighting factor of a learning model learned to process the content; and
an acquisition step of acquiring the attribute information by demultiplexing the received stream.

16. A transmission device comprising:
a multiplexing unit that generates a stream by multiplexing content and attribute information associated with a weighting factor of a learning model learned to process the content; and
a transfer unit that transfers the multiplexed stream to a predetermined transfer medium.

17. The transmission device according to claim 16, further comprising:
a learning unit that learns the weighting factor.

18. The transmission device according to claim 17, wherein
the content includes a picture, and
the learning unit learns a weighting factor for improving image quality of the picture.

19. The transmission device according to claim 16, wherein the attribute information includes information associated with at least one of a type of the content to which the weighting factor is to be applied, a data size of the weighting factor to be updated, position information indicating a position of the weighting factor to be updated in the learning model, and accuracy of data regarding the weighting factor.

20. A transmission method comprising:
a multiplexing step of generating a stream by multiplexing content and attribute information associated with a weighting factor of a learning model learned to process the content; and
a transfer step of transferring the multiplexed stream to a predetermined transfer medium.
